(19) Europäisches Patentamt
European Patent Office
Office européen des brevets

(11) EP 1 526 774 B1

(12) **EUROPEAN PATENT SPECIFICATION**

(45) Date of publication and mention of the grant of the patent:
**21.05.2008 Bulletin 2008/21**

(21) Application number: **03771085.2**

(22) Date of filing: **24.07.2003**

(51) Int Cl.:
***A01N 43/80*** (2006.01)

(86) International application number:
**PCT/EP2003/008114**

(87) International publication number:
**WO 2004/010779 (05.02.2004 Gazette 2004/06)**

# (54) SYNERGISTICALLY ACTING HERBICIDAL MIXTURES

SYNERGISTISCHE HERBIZIDE MISCHUNGEN

MELANGES HERBICIDES A ACTION SYNERGIQUE

(84) Designated Contracting States:
**AT BE BG CH CY CZ DE DK EE ES FI FR GB GR HU IE IT LI LU MC NL PT RO SE SI SK TR**

(30) Priority: **24.07.2002 US 397874 P**

(43) Date of publication of application:
**04.05.2005 Bulletin 2005/18**

(60) Divisional application:
**08101384.9 / 1 917 857**

(73) Proprietor: **BASF SE**
**67056 Ludwigshafen (DE)**

(72) Inventors:
- **KIBLER, Elmar**
  **67454 Hassloch (DE)**
- **O'NEAL, William, B.**
  **Chapel Hill, NC 27516 (US)**
- **WITSCHEL, Matthias**
  **67098 Bad Dürkheim (DE)**
- **VANTIEGHEM, Herve, R.**
  **Basking Ridge, NJ 07920 (US)**
- **WESTBERG, Dan, E.**
  **Cary, NC 27511 (US)**

(56) References cited:
**WO-A-99/65314**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 526 774 B1

## Description

The present invention relates to a synergistic herbicidal mixture comprising

A) at least one 3-heterocyclyl-substituted benzoyl derivative of the formula I

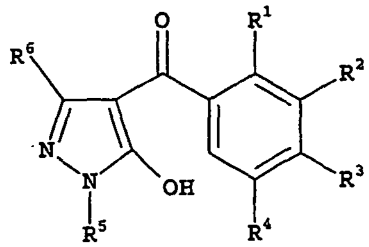

I

in which the variables have the following meanings:

$R^1$, $R^3$ are halogen, $C_1$-$C_6$-alkyl, $C_1$-$C_6$-haloalkyl, $C_1$-$C_6$-alkoxy, $C_1$-$C_6$-haloalkoxy, $C_1$-$C_6$-alkylthio, $C_1$-$C_6$-alkylsulfinyl or $C_1$-$C_6$-alkylsulfonyl;

$R^2$ is a heterocyclic radical selected from the group: isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, it being possible for the six radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^4$ is hydrogen, halogen or $C_1$-$C_6$-alkyl;

$R^5$ is $C_1$-$C_6$-alkyl;

$R^6$ is hydrogen or $C_1$-$C_6$-alkyl;

or one of its environmentally compatible salts;
and
the compound of formula IIb

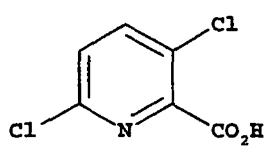

IIb

or one of its environmentally compatible salts
and, if desired
the compound of formula IIa

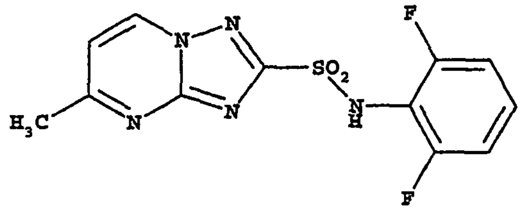

IIa

and

C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides;

in a synergistically effective amount.

The invention furthermore relates to herbicidal compositions comprising a herbicidally active amount of a synergistic herbicidal mixture as defined above and at least one liquid and/or solid carrier and, if desired, at least one surfactant.

Moreover, the invention relates to processes for the preparation of these compositions and to a method of controlling undesirable vegetation.

In crop protection products, it is always desirable to increase the specific activity of an active ingredient and the reliability of action. It is an object of the present invention to increase the activity and/or selectivity of the herbicidally active 3-heterocyclyl-substituted benzoyl derivatives of the formula I against undesirable harmful plants.

We have found that this object is achieved by the mixtures defined at the outset. We have furthermore found herbicidal compositions which comprise these mixtures, processes for their preparation, and methods of controlling undesirable vegetation. In the last-mentioned cases, it is irrelevant whether the herbicidally active compounds of the components A), B) and, if desired, C) are formulated and applied jointly or separately and in which sequence they are applied in the case of separate application.

The mixtures according to the invention show a synergistic effect; the compatibility of the herbicidally active compounds of components A), B) and, if desired C) for certain crop plants is generally retained.

Suitable components C are, as acetyl-CoA carboxylase inhibitors (ACC), for example, cyclohexenone oxime ethers, phenoxyphenoxypropionic esters or arylaminopropionic acids. The acetolactate synthase inhibitors (ALS) include, inter alia, imidazolinones, pyrimidyl ethers, sulfonamides or sulfonyl ureas. Relevant auxin herbicides are, inter alia, pyridine carboxylic acids, 2,4-D or benazolin. Lipid biosynthesis inhibitors which are used are, inter alia, anilides, chloroacetanilides, thioureas, benfuresate or perfluidone. Suitable mitosis inhibitors are, inter alia, carbamates, dinitroanilines, pyridines, butamifos, chlorthal-dimethyl (DCPA) or maleic hydrazide. Examples of protoporphyrino-gen IX oxidase inhibitors are, inter alia, diphenyl ethers, oxadiazoles, cyclic imides or pyrazoles. Suitable photosynthesis inhibitors are, inter alia, propanil, pyridate, pyridafol, benzothiadiazinones, dinitrophenols, dipyridylenes, ureas, phenols, chloridazon, triazine, triazinone, uracils or biscarbamates. The synergists are, inter alia, oxiranes. Examples of suitable growth substances are aryloxyalkanoic acids, benzoic acids or quinolinecarboxylic acids. The group "various other herbicide" is to be understood as meaning, inter alia, the classes of the active ingredients dicloropropionic acids, dihydrobenzofurans, phenylacetic acids and individual herbicides mentioned below whose mechanism of action is not (fully) understood.

Other suitable components C are active compounds selected from the group of the amides, auxin transport inhibitors, carotenoic biosynthesis inhibitors, enolpyruvylshikimate 3-phosphate synthase inhibitors (EPSPS), glutamine synthetase inhibitors and cell wall synthesis inhibitors.

Examples of herbicides which can be used in combination with the 3-heterocyclyl-substituted benzoyl derivatives of formula I and the compound of formula IIb according to the present invention are, inter alia:

C1 acetyl-CoA carboxylase inhibitors (ACC), for example

- cyclohexenone oxime ethers, such as alloxydim, clethodim, cloproxydim, cycloxydim, sethoxydim, tralkoxydim, butroxydim, clefoxydim or tepraloxydim;

- phenoxyphenoxypropionic esters, such as clodinafop-propargyl (and, if appropriate, cloquintocet), cyhalofop-butyl, diclofop-methyl, fenoxaprop-ethyl, fenoxaprop-P-ethyl, fenthiapropethyl, fluazifop-butyl, fluazifop-P-butyl, haloxyfop-ethoxyethyl, haloxyfop-methyl, haloxyfop-P-methyl, isoxapyrifop, propaquizafop, quizalofop-ethyl, quizalofop-P-ethyl or quizalofop-tefuryl; or
- arylaminopropionic acids, such as flamprop-methyl or flamprop-isopropyl;

C2 acetolactate synthase inhibitors (ALS), for example

- imidazolinones, such as imazapyr, imazaquin, imazamethabenz-methyl (imazame), imazamox, imazapic, imazethapyr or imazamethapyr;
- pyrimidyl ethers, such as pyrithiobac-acid, pyrithiobac-sodium, bispyribac-sodium, KIH-6127 or pyribenzoxym;
- sulfonamides, such as florasulam, flumetsulam or metosulam; or
- sulfonylureas, such as amidosulfuron, azimsulfuron, bensulfuron-methyl, chlorimuron-ethyl, chlorsulfuron, cinosulfuron, cyclosulfamuron, ethametsulfuron-methyl, ethoxysulfuron, flazasulfuron, halosulfuron-methyl, imazosulfuron, metsulfuron-methyl, nicosulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]amino]carbonyl]-2-(trifluoromethyl)-benzenesulfon-amide, sulfosulfuron or iodosulfuron;

C3 amides, for example

- allidochlor (CDAA), benzoylprop-ethyl, bromobutide, chlorthiamid, diphenamid, etobenzanid (benzchlomet), fluthiamide, fosamin or monalide;

C4 auxin herbicides, for example

- pyridinecarboxylic acids, such as clopyralid or picloram; or
- 2,4-D or benazolin;

C5 auxin transport inhibitors, for example

- naptalame or diflufenzopyr;

C6 carotenoid biosynthesis inhibitors, for example

- benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon or amitrol;

C7 enolpyruvylshikimate-3-phosphate synthase inhibitors (EPSPS), for example

- glyphosate or sulfosate;

C8 glutamine synthetase inhibitors, for example

- bilanafos (bialaphos) or glufosinate-ammonium;

C9 lipid biosynthesis inhibitors, for example

- anilides, such as anilofos or mefenacet;
- chloroacetanilides, such as dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;
- thioureas, such as butylate, cycloate, di-allate, dimepiperate, EPTC, esprocarb, molinate, pebulate, prosulfocarb, thiobencarb (benthiocarb), tri-allate or vernolate; or
- benfuresate or perfluidone;

C10 mitosis inhibitors, for example

- carbamates, such as asulam, carbetamid, chlorpropham, orbencarb, pronamid (propyzamid), propham or tiocarbazil;
- dinitroanilines, such as benefin, butralin, dinitramin, ethalfluralin, fluchloralin, oryzalin, pendimethalin, prodiamine or trifluralin;
- pyridines, such as dithiopyr or thiazopyr; or
- butamifos, chlorthal-dimethyl (DCPA) or maleic hydrazide;

C11 protoporphyrinogen IX oxidase inhibitors, for example

- diphenyl ethers, such as acifluorfen, acifluorfen-sodium, aclonifen, bifenox, chlornitrofen (CNP), ethoxyfen, fluorodifen, fluoroglycofen-ethyl, fomesafen, furyloxyfen, lactofen, nitrofen, nitrofluorfen or oxyfluorfen;
- oxadiazoles, such as oxadiargyl or oxadiazon;
- cyclic imides, such as azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or
- pyrazoles, such as ET-751, JV 485 or nipyraclofen;

C12 photosynthesis inhibitors, for example

- propanil, pyridate or pyridafol;
- benzothiadiazinones, such as bentazone;
- dinitrophenols, for example bromofenoxim, dinoseb, dinoseb-acetate, dinoterb or DNOC;
- dipyridylenes, such as cyperquat-chloride, difenzoquat-methylsulfate, diquat or paraquat-dichloride;
- ureas, such as chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;
- phenols, such as bromoxynil or ioxynil;
- chloridazon;
- triazines, such as ametryn, atrazine, cyanazine, desmetryn, dimethamethryn, hexazinone, prometon, prometryn, propazine, simazine, simetryn, terbumeton, terbutryn, terbutylazine or trietazine;
- triazinones, such as metamitron or metribuzin;
- uracils, such as bromacil, lenacil or terbacil; or
- biscarbamates, such as desmedipham or phenmedipham;

C13 synergists, for example

- oxiranes, such as tridiphane;

C14 growth substances, for example

- aryloxyalkanoic acids, such as 2,4-DB, clomeprop, dichlorprop, dichlorprop-P (2,4-DP-P), fluoroxypyr, MCPA, MCPB, mecoprop, mecoprop-P or triclopyr;
- benzoic acids, such as chloramben or dicamba; or
- quinolinecarboxylic acids, such as quinclorac or quinmerac;

C15 cell wall synthesis inhibitors, for example

- isoxaben or dichlobenil;

C16 various other herbicides, for example

- dichloropropionic acids, such as dalapon;
- dihydrobenzofurans, such as ethofumesate;
- phenylacetic acids, such as chlorfenac (fenac); or
- aziprotryn, barban, bensulide, benzthiazuron, benzofluor, buminafos, buthidazole, buturon, cafenstrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, profluralin, pyributicarb, secbumeton, sulfallate (CDEC), terbucarb, triaziflam,

triazofenamid or trimeturon;

or their environmentally compatible salts.

The 3-heterocyclyl-substituted benzoyl derivatives of the formula I are disclosed in WO 96/26206, WO 97/41116, WO 97/41117, WO 97/41118 and WO 98/31681.

The compound of formula IIa (common name flumetsulam) and the compound of formula IIb (common name clopyralid) as well as the herbicidally active compounds from amongst groups C1 to C16 are described, for example, in

- "Herbizide [Herbicides]", Hock, Fedtke, Schmidt, 1st edition, Thieme 1995 (s. "quinclorac" p. 238, "molinat" p. 32, "butachlor" p. 32, "pretilachlor" p. 32, "dithiopyr" p. 32, "mefenacet" p. 32, "fenoxapropethyl" p. 216, "dimepiperate" p. 32, "pyrazolynate" p. 146, "pyrazoxyfen" p. 146, "bensulfuronmethyl" p. 31, "pyrazosulfuron-ethyl" p. 31, "cinosulfuron" p. 31, "benfuresate" p. 233, "bromobutide" p. 243, "dymron" p. 243, "dimethyametryn" p. 118, "esprocarb" p. 229, "pyributicarb" p. 32, "cinemthylin" p. 32, "propanil" p. 32, "2,4-D" p. 30, "bentazon" p. 30, "azimsulfuron (DPX-A-8947)" p. 175, "mecoprop-P" p. 237, "chlorpropham" p. 205, "ethoxyfen" p. 30, "haloxyfop-P-methyl" p. 38, "haloxyfop-ethoxyethyl" p. 38, "flumiclorac-pentyl" p. 35, "flupropacil" p. 143, "nipyraclofen" p. 145, "metosulam" p. 33, "ethametsulfuron-methyl" p. 36, "thifensulfuron-methyl" p. 35, "pyrithiobac acid" p. 181);

- "Agricultural Chemicals", Book II Herbicides, 1993 (s. "thiobencarb" p. 85, "benzofenap" p. 221, "napropanilid" p. 49, "piperophos" p. 102, "anilofos" p. 241, "imazosulfuron (TH-913)" p. 150, "etobenzamid (HW-52)" p. 54, "sulcotrione (ICIA-0051)" p. 268, "poast" p. 253, "focus" p. 222, "dimethenamid" p. 48, "sulfosate" p. 236, "2,4-DB" p. 10, "dichlorprop-P" p. 6, "flupoxam" p. 44, "prosulfocarb" p. 84, "quinmerac" p. 233, "metazachlor" p. 64, "flurtamone" p. 265, "bromofenoxim" p. 228, "fomesafen" p. 248, "imazamethabenz-methyl" p. 153, "clodinafop-propargyl" p. 214, "fenoxaprop-P-ethyl" p. 208, "fluazifop-P-butyl" p. 207, "quizalofop-P-ethyl" p. 210, "quizalofop-terfuryl" p. 211, "flumioxazin" p. 43, "flumipropyn" p. 267, "sulfentrazone" p. 261, "thiazopyr" p. 226, "pyrithiobac-sodium" p. 266, "flumetsulam" p. 227, "amidosulfuron" p. 151, "halosulfuron-methyl" p. 148, "rimsulfuron" p. 138, "tribenuron-methyl" p. 139, "triflusul-furon-methyl" p. 137, "primisulfuron-methyl" p. 147) ;

- "Agricultural Chemicals", Book II Herbicides, 13th Edition (s. "carfenstole" p. 284, "sulfosulfuron" p. 145, "ethoxysulfuron" p. 149, "pyribenzoxym" p. 279, "diflufenzopyr" p. 90, "ET-751" p. 278, "carfentrazone-ethyl" p. 267, "fluthiacet-methyl" p. 277, "imazapic" p. 160, "butenachlor" p. 54, "tiocarbazil" p. 84, "fluthiamide" p. 62, "isoxaflutole" p. 283, "butroxydim" p. 259,)

- "Short Review of Herbicides & PGRs 1991, Hodogaya Chemicals (s. "furyloxyfen" p. 142, "triazofenamid" p. 268, "thenylchlorid (NSK-850)" p. 52, "cumyluron (JC-940)" p. 90, "pendimethalin (AC-92553)" p. 58, "buthidazole" p. 88, "cyprazole" p. 38, "allidochlor" p. 48, "benzoylprop-ethyl" p. 38, "chlorthiamid" p. 150, "diphenamid" p. 34, "flamprop-methyl" p. 40, "fosamin" p. 232, "isoxaben" p. 42, "monalide" p. 32, "naptalam" p. 36, "pronamid" p. 34, "bialaphos" p. 234, "glufosinate-ammonium" p. 234, "glyphosate" p. 232, "amitrol" p. 254, "clomeprop p. 20, "dichlorprop" p. 6, "fenoprop" p. 8, "fluroxypyr" p. 156, "MCPA" p. 4, "MCPB" p. 8, "mecoprop" p. 6, "napropamide" p. 16, "triclopyr" p. 154, "chloramben" p. 28, "dicamba" p. 26, "clomazone" p. 268, "diflufenican" p. 42, "fluorochloridone" p. 266, "fluridone" p. 156, "asulam" p. 112, "barban" p. 100, "butylate" p. 106, "carbetamide" p. 36, "chlorobufam" p. 100, "cycloate" p. 108, "desmedipham" p. 104, "di-allate" p. 106, "EPTC" p. 108, "orbencarb" p. 112, "pebulate" p. 106, "phenisopham" p. 118, "phenmedipham" p. 104, "propham" p. 100, "sulfallate" p. 110, "terbucarb" p. 102, "tri-allate" p. 108, "vernolate" p. 108, "acetochlor" p. 48, "alachlor" p. 46, "diethathyl-ethyl" p.48, "dimethachlor" p. 50, "metolachlor" p. 46, "propachlor" p. 44, "pyrnachlor" p. 44, "terbuchlor" p. 48, "xylachlor" p. 52, "alloxydim" p. 260, "clethodim" p. 270, "cloproxydim" p. 268, "tralkoxydim" p. 270, "dalapon" p. 212, "ethofumesate" p. 124, "benefin" p. 54, "butralin" p. 58, "dinitramin" p. 56, "ethalfluralin" p. 60, "fluchloralin" p. 54, "isopropalin" p. 58, "nitralin" p. 58, "oryzalin" p. 60, "prodiamine" p. 62, "profluralin" p. 54, "trifluralin" p. 54, "dinoseb" p. 128, "dinoseb-acetate" p. 128, "dinoterb" p. 128, "DNOC" p. 126, "acifluorfen-sodium" p. 142, "aclonifen" p. 146, "bifenox" p. 140, "chlornitrofen" p. 138, "difenoxuron" p. 76, "fluorodifen" p. 138, "fluoroglycofen-ethyl" p. 146, "lactofen" p. 144, "nitrofen" p. 136, "nitrofluorfen" p. 140, "oxyfluorfen" p. 140, "cyperquat-chloride" p. 158, "difenzoquat-methylsulfate" p. 160, "diquat" p. 158, "paraquat-dichloride" p. 158, "benzthiazuron" p. 82, "buturon" p. 66, "chlorbromuron" p. 72, "chloroxuron" p. 76, "chlorotoluron" p. 74, "cycluron" p. 84, "dimefuron" p. 88, "diuron" p. 70, "ethidimuron" p. 86, "fenuron" p. 64, "fluometuron" p. 68, "isoproturon" p. 80, "isouron" p. 88, "karbutilate" p. 76, "linuron" p. 72, "methabenzthiazuron" p. 82, "metoxuron" p. 72, "monolinuron" p. 66, "monuron" p. 64, "neburon" p. 72, "siduron" p. 68, "tebuthiuron" p. 86, "trimeturon" p. 64, "isocarbamid" p. 168, "imazamethapyr" p. 172, "imazapyr" p. 170, "imazaquin" p. 170, "imazethapyr" p. 172, "methazole" p. 162, "oxadiazon" p. 162, "tridiphane" p. 266, "bromoxynil" p. 148, "ioxynil" p. 148, "diclofop-methyl" p. 16, "fenthiaprop-ethyl" p. 20, "fluazifop-butyl" p. 18, "haloxyfop-methyl" p. 18, "isoxapyrifop" p. 22, "propaquizafop" p. 24, "quizalofop-ethyl" p. 20, "chlorfenac" p. 258, "chlorfenprop-methyl" p. 258, "chloridazon"

p. 174, "maleic hydrazide" p. 162, "norflurazon" p. 174, "pyridate" p. 176, "clopyralid" p. 154, "picloram" p. 154, "chlorimuron-ethyl" p. 92, "chlorsulfuron" p. 92, "flazasulfuron" p. 96, "metsulfuron-methyl" S.92, "nicosulfuron" p. 96, "sulfometuron-methyl" p. 92, "triasulfuron" p. 94, "ametryn" p. 198, "atrazine" p. 188, "aziprotryne" p. 206, "cyanazine" p. 192, "cyprazine" p. 192, "desmetryne" p. 200, "dipropetryn" p. 202, "eglinazine-ethyl" p. 208, "hexazinone" p. 208, "procyazine" p. 192, "prometone" p. 196, "prometryn" p. 196, "propazine" p. 188, "secbumeton" p. 196, "simazine" p. 188, "simetryn" p. 196, "terbumeton" p. 204, "terbutryn" p. 198, "terbutylazine" p. 190, "trietazine" p. 188, "ethiozine" p. 210, "metamitron" p. 206, "metribuzin" p. 202, "bromacil" p. 180, "lenacil" p. 180, "terbacil" p. 180, "benazolin" p. 262, "bensulide" p. 228, "benzofluor" p. 266, "butamifos" p. 228, "DCPA" p. 28, "dichlobenil" p. 148, "endothal" p. 264, "mefluidide" p. 306, "perfluidone" p. 260, "terbuchlor" p. 48);

- "Global Herbicide Directory" First Edition, 1994 (s. "oxadiargyl" p. 96);
- "European Directory of Agrochemical Products" Volume 2 - Herbicides" Fourth Edition, (s. "buminafos" p. 255);
- "The Pesticide Maunal, 12th edition, 2000 (s. "bispyribac-sodium" p. 97, "florasulam" p. 420, "cyclosulfamuron" p. 217, "pretiachlor" p. 755).

Moreover, the compound "DEH-112" is disclosed in European Patent Application EP-A 302 203. The compound "tepraloxydim" is described in DE-A 33 36 140; the compound "cinidon-ethyl" in DE-A 36 03 789 and the compound "fluorbentranil" in EP-A 84 893. Other compounds are known from "Brighton Crop Protection Conference - Weeds - 1993" (S. "thidiazimin" p. 29, "AC-322140" p. 41, "KIH-6127" p. 47, "prosulfuron" p. 53, "KIH-2023" p. 61, "metobenzuron" p. 67). The compound "carfenstrole (CH-900)" is mentioned in EP-A 332 133, and the compound N-[[[4-methoxy-6-(trifluoromethyl)-1,3,5-triazin-2-yl]amino]-carbonyl]-2-(trifluoromethyl-benzenesulfonamide) is described in PCT/EP 96/03996.

The assignment of the active ingredients to the respective mechanisms of action is based on current knowledge. If several mechanisms of action apply to one active ingredient, this substance was only assigned to one mode of action.

The 3-heterocyclyl-substituted benzoyl derivatives of the formula I can exist, or be used, in the form of the pure enantiomers and also as racemates or diastereomer mixtures.

The 3-heterocyclyl-substituted benzoyl derivatives of the formula I and/or the compound of formula IIb and/or the herbicidally active compounds from amoungs groups C1 to C16 may also exist in the form of their environmentally compatible salts. Suitable salts are, in general, the salts of those cations, or the acid addition salts of those acids, whose cations, or anions, respectively, do not adversely affect the herbicidal action of the active ingredients.

Suitable cations are, in particular, ions of the alkali metals, preferably lithium, sodium and potassium, of the alkaline earth metals, preferably calcium and magnesium, and of the transition metals, preferably manganese, copper, zinc and iron, and also ammonium, it being possible in this case, if desired, for one to four hydrogen atoms to be replaced by $C_1$-$C_4$-alkyl, hydroxy-$C_1$-$C_4$-alkyl, $C_1$-$C_4$-alkoxy-$C_1$-$C_4$-alkyl, hydroxy-$C_1$-$C_4$-alkoxy-$C_1$-$C_4$-alkyl, phenyl or benzyl, preferably ammonium, isopropylammonium, dimethylammonium, diisopropylammonium, tetramethylammonium, tetrabutylammonium, 2-(2-hydroxyeth-1-oxy)eth-1-yl ammonium, di(2-hydroxyeth-1-yl)ammonium, trimethylbenzylammonium, furthermore phosphonium ions, sulfonium ions, preferably tri($C_1$-$C_4$-alkyl)-sulfonium and sulfoxonium ions, preferably, tri($C_1$-$C_4$-alkyl)-sulfoxonium.

Anions of suitable acid addition salts are mainly chloride, bromide, fluoride, hydrogen sulfate, sulfate, dihydrogen phosphate, hydrogen phosphate, nitrate, hydrogen carbonate, carbonate, hexafluorosilicate, hexafluorophosphate, benzoate and the anions of $C_1$-$C_4$-alkanoic acids, preferably formate, acetate, propionate and butyrate.

Preferred with regard to the synergistic herbicidal action of the mixtures according to the invention are those 3-heterocyclyl-substituted benzoyl derivatives of the formula I in which the variables have the following meanings, either alone or in combination:

$R^1$ halogen such as chlorine or bromine, $C_1$-$C_6$-alkyl such as methyl or ethyl or $C_1$-$C_6$-alkylsulfonyl such as methylsulfonyl or ethylsulfonyl; especially preferably chlorine, methyl or methylsulfonyl;

$R^2$ a heterocyclic radical selected from the group: isoxazol-3-yl, isoxazol-5-yl and 4,5-dihydroisoxazol-3-yl, it being possible for the three radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;
especially preferably isoxazol-5-yl, 3-methyl-isoxazol-5-yl, 4,5-dihydroisoxazol-3-yl, 5-methyl-4,5-dihydroisoxazol-yl, 5-ethyl-4,5-dihydroisoxazol-3-yl or 4,5-dimethyl-4,5-dihydroisoxazol-3-yl;

$R^3$ halogen such as chlorine or bromine or $C_1$-$C_6$-alkylsulfonyl such as methylsulfonyl or ethylsulfonyl;
especially preferably chlorine, methylsulfonyl or ethylsulfonyl;

$R^4$ hydrogen or methyl; especially preferably hydrogen;

$R^5$ is $C_1$-$C_6$-alkyl, such as methyl, ethyl, propyl, 1-methylethyl, butyl, 1-methylpropyl or 2-methylpropyl; especially preferably methyl, ethyl or 1-methylethyl;

$R^6$ hydrogen or $C_1$-$C_6$ alkyl, such as methyl or ethyl; especially preferably hydrogen or methyl.

Very particularly preferred are those 3-heterocyclyl-substituted benzoyl derivatives of the formula Ia, in particular the compounds Ia.1 to Ia.47, which are mentioned in Table 1 which follows:

Table 1

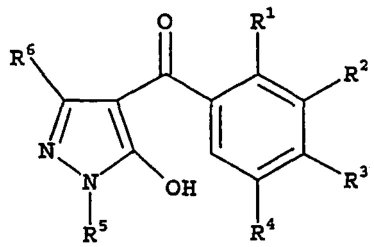

I

| No. | $R^1$ | $R^2$ | $R^3$ | $R^4$ | $R^5$ | $R^6$ |
|---|---|---|---|---|---|---|
| Ia.1 | Cl | 4,5-dihydroisoxazol-3-yl | $SO_2CH_3$ | H | $CH_3$ | $CH_3$ |
| Ia.2 | Cl | 4,5-dihydroisoxazol-3-yl | Cl | H | $CH_3$ | $CH_3$ |
| Ia.3 | Cl | 4,5-dihydroisoxazol-3-yl | $SO_2CH_3$ | H | $CH_3$ | H |
| Ia.4 | Cl | 4,5-dihydro-5-methylisoxazol-3-yl | $SO_2CH_3$ | H | $CH_3$ | H |
| Ia.5 | Cl | 4,5-dihydro-5,5-dimethylisoxazol-3-yl | $SO_2CH_3$ | H | $CH_3$ | H |
| Ia.6 | Cl | 4,5-dihydro-5-ethylisoxazol-3-yl | $SO_2CH_3$ | H | $CH_3$ | H |
| Ia.7 | Cl | 4,5-dihydro-5,5-diethylisoxazol-3-yl | $SO_2CH_3$ | H | $CH_3$ | H |
| Ia.8 | Cl | 4,5-dihydro-5-chloromethylisoxazol-3-yl | $SO_2CH_3$ | H | $CH_3$ | H |
| Ia.9 | Cl | 4,5-dihydro-5-ethoxyisoxazol-3-yl | $SO_2CH_3$ | H | $CH_3$ | H |
| Ia.10 | Cl | 4,5-dihydro-5-methoxyisoxazol-3-yl | $SO_2CH_3$ | H | $CH_3$ | H |
| Ia.11 | Cl | 4,5-dihydro-4,5-dimethylisoxazol-3-yl | $SO_2CH_3$ | H | $CH_3$ | H |
| Ia.12 | Cl | 4,5-dihydro-5-thioethylisoxazol-3-yl | $SO_2CH_3$ | H | $CH_3$ | H |
| Ia.13 | Cl | 4,5-dihydro-5-trifluoromethylisoxazol-3-yl | $SO_2CH_3$ | H | $CH_3$ | H |
| Ia.14 | Cl | 4,5-dihydroisoxazol-3-yl | $SO_2CH_3$ | H | $C_2H_5$ | H |
| Ia.15 | Cl | 4,5-dihydroisoxazol-3-yl | Cl | H | $C_2H_5$ | H |
| Ia.16 | Cl | 4,5-dihydro-5-methylisoxazol-3-yl | $SO_2CH_3$ | H | $C_2H_5$ | H |
| Ia.17 | Cl | 4,5-dihydro-5,5-dimethylisoxazol-3-yl | $SO_2CH_3$ | H | $C_2H_5$ | H |
| Ia.18 | Cl | 4,5-dihydro-5-ethylisoxazol-3-yl | $SO_2CH_3$ | H | $C_2H_5$ | H |
| Ia.19 | Cl | 4,5-dihydro-5,5-diethylisoxazol-3-yl | $SO_2CH_3$ | H | $C_2H_5$ | H |
| Ia.20 | Cl | 4,5-dihydro-5-chioromethylisoxazol-3-yl | $SO_2CH_3$ | H | $C_2H_5$ | H |
| Ia.21 | Cl | 4,5-dihydroisoxazol-3-yl | $SOCH_3$ | H | $C_2H_5$ | H |
| Ia.22 | Cl | 4,5-dihydro-5-ethoxyisoxazol-3-yl | $SO_2CH_3$ | H | $C_2H_5$ | H |
| Ia.23 | Cl | 4,5-dihydro-4,5-dimethylisoxazol-3-yl | $SO_2CH_3$ | H | $C_2H_5$ | H |
| Ia.24 | Cl | 4,5-dihydro-5-thioethylisoxazol-3-yl | $SO_2CH_3$ | H | $C_2H_5$ | H |

(continued)

| No. | $R^1$ | $R^2$ | $R^3$ | $R^4$ | $R^5$ | $R^6$ |
|---|---|---|---|---|---|---|
| Ia.25 | Cl | 4,5-dihydro-5-trifluoromethylisoxazol-3-yl | $SO_2CH_3$ | H | $C_2H_5$ | H |
| Ia.26 | Cl | 4,5-dihydroisoxazol-3-yl | $SO_2CH_3$ | H | i-$C_4H_9$ | H |
| Ia.27 | $CH_3$ | 4,5-dihydroisoxazol-3-yl | $SO_2CH_3$ | H | $CH_3$ | $CH_3$ |
| Ia.28 | $CH_3$ | 4,5-dihydroisoxazol-3-yl | Cl | H | $CH_3$ | $CH_3$ |
| Ia.29 | $CH_3$ | 4,5-dihydroisoxazol-3-yl | $SO_2CH_3$ | H | $CH_3$ | H |
| Ia.30 | $CH_3$ | 4,5-dihydro-5-methylisoxazol-3-yl | $SO_2CH_3$ | H | $CH_3$ | H |
| Ia.31 | $CH_3$ | 4,5-dihydro-5,5-dimethylisoxazol-3-yl | $SO_2CH_3$ | H | $CH_3$ | H |
| Ia.32 | $CH_3$ | 4,5-dihydro-5-ethylisoxazol-3-yl | $SO_2CH_3$ | H | $CH_3$ | H |
| Ia.33 | $CH_3$ | 4,5-dihydro-5,5-diethylisoxazol-3-yl | $SO_2CH_3$ | H | $CH_3$ | H |
| Ia.34 | $CH_3$ | 4,5-dihydroisoxazol-3-yl | $SO_2CH_3$ | H | $CH_3$ | H |
| Ia.35 | $CH_3$ | 4,5-dihydro-4,5-dimethylisoxazol-3-yl | $SO_2CH_3$ | H | $CH_3$ | H |
| Ia.36 | $CH_3$ | 4,5-dihydroisoxazol-3-yl | $SO_2CH_3$ | H | $C_2H_5$ | H |
| Ia.37 | $CH_3$ | 4,5-dihydroisoxazol-3-yl | Cl | H | $C_2H_5$ | H |
| Ia.38 | $CH_3$ | 4,5-dihydro-5-methylisoxazol-3-yl | $SO_2CH_3$ | H | $C_2H_5$ | H |
| Ia.39 | $CH_3$ | 4,5-dihydro-5,5-dimethylisoxazol-3-yl | $SO_2CH_3$ | H | $C_2H_5$ | H |
| Ia.40 | $CH_3$ | 4,5-dihydro-5-ethylisoxazol-3-yl | $SO_2CH_3$ | H | $C_2H_5$ | H |
| Ia.41 | $CH_3$ | 4,5-dihydro-5,5-diethylisoxazol-3-yl | $SO_2CH_3$ | H | $C_2H_5$ | H |
| Ia.42 | $CH_3$ | 4,5-dihydro-4,5-dimethylisoxazol-3-yl | $SO_2CH_3$ | H | $C_2H_5$ | H |
| Ia.43 | $CH_3$ | 4,5-dihydroisoxazol-3-yl | $SO_2CH_3$ | H | i-$C_4H_9$ | H |
| Ia.44 | Cl | 3-methylisoxazol-5-yl | $SO_2CH_3$ | H | $CH_3$ | H |
| Ia.45 | Cl | 3-methylisoxazol-5-yl | $SO_2CH_3$ | H | $C_2H_5$ | H |
| Ia.46 | $CH_3$ | 3-methylisoxazol-5-yl | $SO_2CH_3$ | H | $CH_3$ | H |
| Ia.47 | $CH_3$ | 3-methylisoxazol-5-yl | $SO_2CH_3$ | H | $C_2H_5$ | H |

- Also very particularly preferred are the compounds Ib, in particular the compounds 1b.1 to 1b.47, which differ from the compounds Ia.1 to Ia.47 only by the fact that they are present as the sodium salt:

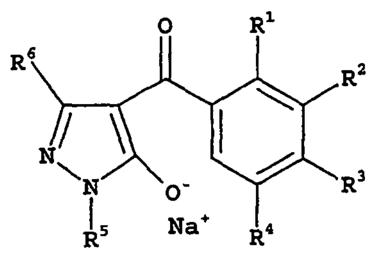

Ib

- Also very particularly preferred are the compounds Ic, in particular the compounds Ic.1 to Ic.47, which differ from the compounds Ia.1 to Ia.47 only by the fact that they are present as the lithium salt:

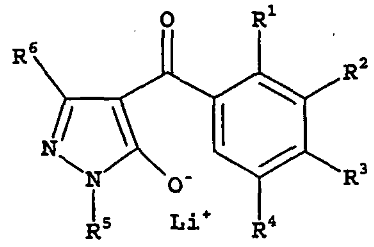

Ic

- Also very particularly preferred are the compounds Id, in particular the compounds Id.1 to Id.47, which differ from the compounds Ia.1 to Ia.47 only by the fact that they are present as the potassium salt:

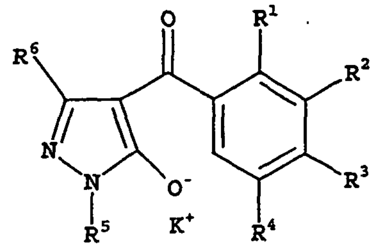

Id

- Also very particularly preferred are the compounds Ie, in particular the compounds Ie.1 to Ie.47, which differ from the compounds Ia.1 to Ia.47 only by the fact that they are present as the ammonium salt:

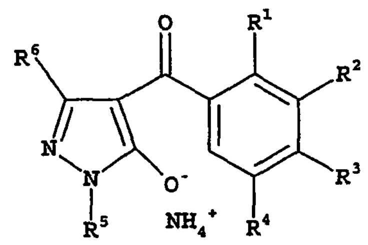

Ie

- Very particularly preferred are, especially, the compounds Ia, especially the compounds Ia.1 to Ia.47.

- Very particularly preferred are, moreover, the 3-heterocyclyl-substituted benzoyl derivatives of the formula I, where

  $R^4$ is hydrogen.

- Very particularly preferred are, moreover, the 3-heterocyclyl substituted benzoyl derivatives of the formula I where

  $R^2$ is a heterocyclic radical selected from the group: isoxazol-3-yl, isoxazol-4-yl and isoxazol-5-yl, it being possible for the three radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.
  Very particularly preferred are, especially, the 3-heterocyclyl-substituted benzoyl derivatives of the formula I, where

  $R^2$ is isoxazol-3-yl which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

  $R^4$ is hydrogen.

Very particularly preferred are also, especially, the 3-heterocyclyl-substituted benzoyl derivatives of the formula I

where

$R^2$ is isoxazol-5-yl, which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^4$ is hydrogen.

Most particularly preferred is 4-[2-chloro-3-(3-methylisoxazol-5-yl)-4-methylsulfonyl-benzoyl]-1-methyl-5-hydroxy-1H-pyrazole.

Most particularly preferred is also 4-[2-methyl-3-(3-methylisoxazol-5-yl)-4-methylsulfonyl-benzoyl]-1-methyl-5-hydroxy-1H-pyrazole.

- Very particularly preferred are, moreover, the 3-heterocyclyl-substituted benzoyl derivatives of the formula I where

  $R^2$ is a heterocyclic radical selected from the group: 4,5-dihydroisoxazol-3-yl, 4,5-dihydroisoxazol-4-yl and 4,5-dihydroisoxazol-5-yl, it being possible for the three radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

Very particularly preferred are, especially, the 3-heterocyclyl-substituted benzoyl derivatives of the formula I where

$R^2$ is 4,5-dihydroisoxazol-3-yl which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^4$ is hydrogen.

Most particularly preferred are the 3-heterocyclyl-substituted benzoyl derivatives of the formula I where

$R^1$ is halogen or $C_1$-$C_6$-alkyl; and

$R^2$ is 4,5-dihydroisoxazol-3-yl which can be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;

$R^3$ is $C_1$-$C_6$-alkylsulfonyl;

$R^4$ is hydrogen.

Most especially preferred is 4-[2-chloro-3-(4,5-dihydroisoxazol-3-yl)-4-methylsulfonylbenzoyl]-1-methyl-5-hydroxy-1H-pyrazole.

Most particularly preferred is also 4-[2-methyl-3-(4,5-dihydroisoxazol-3-yl)-4-methylsulfonyl-benzoyl]-1-methyl-5-hydroxy-1H-pyrazole.

- In a further particular embodiment, the synergistic herbicidal mixture comprises, as component A at least a compound of the formula I, as component B the compound of formula IIa, and the compound of formula IIb, and as component C at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides; or the respective environmentally compatible salts thereof.
  In particular the synergistic herbicidal mixture comprises as component A 4-[2-methyl-3-(4,5-dihydroisoxazol-3-yl)-4-methylsulfonyl-benzoyl]-1-methyl-5-hydroxy-1H-pyrazole and as component B the compound of formula IIa and the compound of formula IIb.
  In particular the synergistic herbicidal mixture comprises as component A 4-[2-methyl-3-(4,5-dihydroisoxazol-3-yl)-4-methylsulfonyl-benzoyl]-1-methyl-5-hydroxy-1H-pyrazole and as component B the compound of formula IIb.
- In a further particular embodiment, the synergistic herbicidal mixture comprises, at least,
  as component A) a 3-heterocyclyl-substituted benzoyl derivative of the formula I;
  as component B) at least or the compound of formula IIb; and

as component C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In an especial particular embodiment, the synergistic herbicidal mixture comprises, at least,
as component A) a 3-heterocyclyl-substituted benzoyl derivative of the formula I;
as component B) the compound of formula IIa and the compound of formula IIb; and
as component C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In a further particular embodiment, the synergistic herbicidal mixture comprises, at least,
as component A) a 3-heterocyclyl-substituted benzoyl derivative of the formula I;
as component B) the compound of formula IIb; and
as component C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In a further particular embodiment, the synergistic herbicidal mixture comprises three herbicidal active compounds, a compound of formula I (component A), as component B the compound of formula IIb and as component C) a herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In a further particular embodiment, the synergistic herbicidal mixture comprises four herbicidal active compounds, a compound of formula I (component A), as component B the compound of formula IIb and as component C) two herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In a further particular embodiment, the synergistic herbicidal mixture comprises at least four herbicidal active compounds, a compound of formula I (component A), as component B the compound of formula IIa and the compound of formula IIb and as component C) a herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In a further particular embodiment, the synergistic herbicidal mixture comprises four herbicidal active compounds, a compound of formula I (component A), as component B the compound of formula IIa and the compound of formula IIb and as component C) a herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

In a further particular embodiment, the synergistic herbicidal mixture comprises five herbicidal active compounds, a compound of formula I (component A), as component B the compound of formula IIa and the compound of formula IIb and as component C) two herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylshikimate 3-phosphate synthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides.

With a view to the synergistic herbicidal action of the mixtures comprising a component A), B) and C) according

to the invention, compounds from amongst groups C1 to C14 or C16, preferably from amongst groups C5, C9 and C12, especially from amongst groups C9 and C12, are preferred as component C).

In particular, compounds from amongst the classes of active ingredients mentioned below are preferred, or the following compounds are very particularly preferred:

C1 acetyl-CoA carboxylase inhibitors (ACC):

- cyclohexenone oxime ethers, in particular cycloxydim, sethoxydim or tralkoxydim, preferably sethoxydim or tralkoxydim; or
- phenoxyphenoxypropionic esters, in particular clodinafop-propargyl (and, if appropriate, cloquintocet), fenoxaprop-ethyl or fenoxaprop-P-ethyl, preferably clodinafop-propargyl (and, if appropriate, cloquintocet) or fenoxaprop-P-ethyl;

C2 acetolactate synthase inhibitors (ALS):

- imidazolinones, in particular imazapyr, imazaquin, imazamethabenz, imazethapyr or imazamox, preferably imazapyr;
- pyrimidyl ethers, in particular pyrithiobac sodium;
- sulfonamides, in particular florasulam, flumetsulam or metosulam, preferably metosulam; or
- sulfonylureas, in particular halosulfuron-methyl, nicosulfuron, primisulfuron-methyl, prosulfuron, rimsulfuron, thifensulfuron-methyl, tribenuron-methyl, N-[[[4-methoxy-6-(trifluoromethyl)-1,3,5-triazin-2-yl]-amino]carbonyl]-2-(trifluoromethyl)-benzenesulfonamide sulfosulfuron or iodosulfuron; especially halosulfuron-methyl, nicosulfuron, primisulfuron-methyl, prosulfuron, rimsulfuron, thifensulfuron-methyl, tribenuron-methyl, N-[[[4-methoxy-6-(trifluoromethyl)-1,3,5-triazin-2-yl]-amino]carbonyl]-2-(trifluoromethyl)-benzenesulfonamide or sulfosulfuron;

C3 amides:

- fluthiamide;

C4 auxin herbicides:

- pyridinecarboxylic acids, in particular clopyralid; or
- 2,4-D;

C5 auxin transport inhibitors:

- diflufenzopyr;

C6 carotenoid biosynthesis inhibitors:

- isoxaflutole, mesotrione, isoxachloride, ketospiradox or sulcotrione (chlormesulone), in particular isoxaflutole or sulcotrione;

C7 enolpyruvylshikimate-3-phosphate synthase inhibitors (EPSPS) :

- glyphosate or sulfosate;

C8 glutamin synthetase inhibitors:

- glufosinate-ammonium;

C9 lipid biosynthesis inhibitors:

- chloroacetanilides, in particular dimethenamid, S-dimethenamid, acetochlor, metolachlor or S-metolachlor,
- thioureas, in particular benthiocarb;

C10 mitosis inhibitors:

- dinitroanilines, in particular pendimethalin;

C11 protoporphyrinogen IX oxidase inhibitors:

- diphenyl ethers, in particular acifluorfen or acifluorfen-sodium;
- oxadiazoles, in particular oxadiargyl; or
- cyclic imides, in particular butafenacil, carfentrazone-ethyl, cinidon-ethyl or flumiclorac-pentyl, preferably carfentrazone-ethyl, cinidon-ethyl or flumidorac-pentyl;
- pyrazoles, in particular JV 85;

C12 photosynthesis inhibitors:

- pyridate or pyridafol, in particular pyridate;
- benzothiadiazinones, in particular bentazone;
- dipyridylenes, in particular paraquat-dichloride;
- ureas, in particular diuron or isoproturon, preferably diuron;
- phenols, in particular bromoxynil;
- chloridazone;
- triazines, in particular atrazine or terbutylazine; or
- triazinones, in particular metribuzin;

C13 synergists:

- oxiranes, in particular tridiphane;

C14 growth substances:

- aryloxyalkanoic acids, in particular fluoroxypyr, MCPA or mecoprop-P;
- benzoic acids, in particular dicamba; or
- quinolinecarboxylic acids, in particular quinclorac;

C16 various other herbicides:

- triaziflam.

In particular, compounds from amongst the classes of active ingredients mentioned below are preferred, or the following compounds are very particularly preferred.

C5 auxin transport inhibitors:

- diflufenzopyr;

C9 lipid biosynthesis inhibitors:

- chloroacetanilides, in particular dimethenamid, S-dimethenamid, acetochlor, metolachlor or S-metolachlor,
- thioureas, in particular benthiocarb;

C12 photosynthesis inhibitors:

- pyridate;
- benzothiadiazinones, in particular bentazone;
- dipyridylenes, in particular paraquat-dichloride;
- ureas, in particular diuron or isobroturon, preferably diuron;
- phenols, in particular bromoxynil;
- chloridazon;
- triazines, in particular atrazine or terbutylazine; or
- triazinones, in particular metribuzin;

In particular, compounds from amongst the classes of active ingredients mentioned below are extraordinary preferred, or the following compounds are very particularly preferred.

C9 lipid biosynthesis inhibitors:

- chloroacetanilides, in particular dimethenamid, S-dimethenamid, acetochlor, metolachlor or S-metolachlor,
- thioureas, in particular benthiocarb;

C12 photosynthesis inhibitors:

- pyridate;
- benzothiadiazinones, in particular bentazone;
- dipyridylenes, in particular paraquat-dichloride;
- ureas, in particular diuron or isobroturon, preferably diuron;
- phenols, in particular bromoxynil;
- chloridazon;
- triazines, in particular atrazine or terbutylazine; or
- triazinones, in particular metribuzin;

Also especially preferred are synergistic herbicidal mixtures which comprise as component A 4-[2-methyl-3-(4,5-dihydro-isoxazol-3-yl)-4-methylsulfonyl-benzoyl]-1-methyl-5-hydroxy-1H-pyrazole, as component B the compound of formula IIb and as component C) an auxin transport inhibitor, in particular diflufenzopyr.

Also especially preferred are synergistic herbicidal mixtures which comprise as component A 4-[2-methyl-3-(4,5-dihydro-isoxazol-3-yl)-4-methylsulfonyl-benzoyl]-1-methyl-5-hydroxy-1H-pyrazole, as component B the compound of formula IIb and as component C) a herbicidal compound from the group C9.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIb and as component C a chloroacetanilide, in particular acetochlor.

Also specially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIb and as component C) a herbicidal compound from the group C12.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIb and as component C a triazine, in particular atrazine.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIb and as component C) a herbicidal compound from the group C5 and a herbicidal compound from the group C12.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIb and as component C a auxin transport inhibitor and a triazine.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIb and as component C diflufenzopyr and atrazine.

Also especially preferred are synergistic herbicidal mixtures which comprise as component A 4-[2-methyl-3-(4,5-dihydro-isoxazol-3-yl)-4-methylsulfonyl-benzoyl]-1-methyl-5-hydroxy-1H-pyrazole, as component B the compound of formula IIa and the compound of formula IIb, and as component C) an auxin transport inhibitor, in particular diflufenzopyr.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb, and as component C) a herbicidal compound from the group C9.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb, and as component C a chloroacetanilide, in particular acetochlor.

Also preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb, and as component C) a herbicidal compound from the group C12.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb, and as component C a triazine, in particular atrazine.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb and as component C) a herbicidal compound from the group C5 and a herbicidal compound from the group C12.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb and as component C a auxin transport inhibitor and a triazine.

Also especially preferred are synergistic herbicidal mixtures which comprise as component A 4-[2-methyl-3-(4,5-dihydroisoxazol-3-yl)-4-methylsulfonyl-benzoyl]-1-methyl-5-hydroxy-1H-pyrazole, as component B the compound of formula IIa and the compound of formula IIb and as component C diflufenzopyr and atrazine.

The present invention also extends to herbicidal compositions which comprise a herbicidally active amount of a synergistic herbicidal mixture (comprising components A), B) and C) as described above), at least one liquid and/or solid carrier and, if desired, at least one surfactant.

The herbicidal compositions and synergistic herbicidal mixtures according to the invention can effect very good control of broad-leaved weeds and grass weeds in crops such as maize, cereals, rice and soya without damaging the crop plants, an effect observed especially even at low rates of application.

Taking into consideration the variety of application method in question, the herbicidal compositions and synergistic herbicidal mixtures according to the invention can additionally be employed in a further number of crop plants for eliminating undesirable plants. Examples of suitable crops are the following:

> Allium cepa, Ananas comosus, Arachis hypogaea, Asparagus officinalis, Beta vulgaris ssp. altissima, Beta vulgaris ssp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum; Prunus avium, Prunus persica, Pyrus communis, Ribes sylvestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera und Zea mays.

Moreover, the herbicidal compositions and synergistic herbicidal mixtures according to the invention can also be used in crops which tolerate the action of herbicides due to breeding, including genetic engineering methods.

The mixtures according to the invention, or the herbicidal compositions comprising them, can be employed, for example, in the form of directly sprayable aqueous solutions, powders, suspensions, also highly-concentrated aqueous, oily or other suspensions or dispersions, emulsions, oil dispersions, pastes, dusts, materials for spreading or granules, by means of spraying, atomizing, dusting, spreading or pouring.

The use forms depend on the intended purposes; in any case, they should guarantee the finest possible distribution of the active ingredients according to the invention.

Suitable inert auxiliaries are mineral oil fractions of medium to high boiling point such as kerosene and diesel oil, furthermore coal tar oils and oils of vegetable or animal origin, aliphatic, cyclic and aromatic hydrocarbons, e.g. paraffins, tetrahydronaphthalene, alkylated naphthalenes and their derivatives, alkylated benzenes and their derivatives, alcohols such as methanol, ethanol, propanol, butanol and cyclohexanol, ketones such as cyclohexanone, strongly polar solvents, such as N-methylpyrrolidone and water.

Aqueous use forms can be prepared from emulsion concentrates, suspensions, pastes, wettable powders or water-dispersible granules by adding water. To prepare emulsions, pastes or oil dispersions, the substances, as such or dissolved in an oil or solvent, can be homogenized in water by means of wetting agent, tackifier, dispersant or emulsifier. However, it is also possible to prepare concentrates composed of active substance, wetting agent, tackifier, dispersant or emulsifier and, if appropriate, solvent or oil, and these concentrates are suitable for dilution with water.

Suitable surfactants are the alkali metal, alkaline earth metal and ammonium salts of aromatic sulfonic acids, e.g. ligno-, phenol-, naphthalene- and dibutylnaphthalenesulfonic acid, and of fatty acids, of alkyl- and alkylaryl sulfonates, of alkyl sulfates, lauryl ether sulfates and fatty alcohol sulfates, and salts of sulfated hexa-, hepta- and octadecanols, and of fatty alcohol glycol ether, condensates of sulfonated naphthalene and its derivatives with formaldehyde, condensates of naphthalene, or of the naphthalenesulfonic acids, with phenol and formaldehyde, polyoxyethylene octylphenyl ether, ethoxylated isooctyl-, octyl- or nonylphenol, alkylphenyl and tributylphenyl polyglycol ether, alkylaryl polyether

alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignin-sulfite waste liquors or methylcellulose.

Powders, materials for spreading and dusts can be prepared by mixing or concomitantly grinding the synergistic herbicidal mixture or the individual active ingredients with a solid carrier.

Granules, e.g. coated granules, impregnated granules and homogeneous granules, can be prepared by binding the active ingredients to solid carriers. Solid carriers are mineral earths such as silicas, silica gels, silicates, talc, kaolin, limestone, lime, chalk, bole, loess, clay, dolomite, diatomaceous earth, calcium sulfate, magnesium sulfate, magnesium oxide, ground synthetic material, fertilizers such as ammonium sulfate, ammonium phosphate, ammonium nitrate, ureas and products of vegetable origin such as cereal meal, tree bark meal, wood meal and nutshell meal, cellulose powders or other solid carriers.

The concentrations of the mixtures according to the invention in the ready-to-use products can be varied within wide ranges. In general, the formulations comprise from 0.01 to 95% by weight, preferably 0.5 to 90% by weight, of the mixture according to the invention.

The components A) and B) and C) can be formulated jointly, but also separately, and/or applied to the plants, their environment and/or seeds jointly or separately. It is preferable to apply the active ingredients simultaneously. However, it is also possible to apply them separately.

Also the respective herbicides of the components A), B) and C), especially the compound of formula IIa and the compound of formula IIb can be formulated jointly, but also separately, and/or applied to the plants, their environment and/or seeds jointly or separately.

Moreover, it may be advantageous to apply the herbicidal compositions and synergistic herbicidal mixtures according to the invention, jointly or separately, with additional other crop protection agents, for example with pesticides or agents for controlling phytopathogenic fungi or bacteria. Also of interest is the miscibility with mineral salt solutions which are employed for treating nutritional and trace element deficiencies. Non-phytotoxic oils and oil concentrates can also be added.

The mixtures according to the invention and the herbicidal compositions can be applied pre- or post-emergence. If the active ingredients are less well tolerated by certain crop plants, application techniques may be used in which the herbicidal compositions are sprayed, with the aid of the spray apparatus, in such a way that they come into as little contact, if any, with the leaves of the sensitive crop plants while reaching the leaves of undesirable plants which grow underneath, or the bare soil (post-directed, lay-by).

In the case of a post-emergence treatment of the plants, the herbicidal compositions according to the invention are preferably applied by foliar application. Application may be effected, for example, by usual spraying techniques with water as the carrier, using amounts of spray mixture of approx. 100 to 1000 1/ha. The compositions may also be applied by the so-called "low-volume" and "ultra-low-volume" methods, or in the form of so-called granules.

As a rule, the synergistic herbicidal mixtures comprise components A), B) and C) in such weight ratios that the synergistic effect takes place.

The ratios of component A) and B) in the mixture preferably range from 1:0.001 to 1:500, preferably from 1: 0.01 to 1:200, particularly preferably from 1:0.01 to 1:100, especially from from 1:0.1 to 1:50.

The ratios of components A) and C) in the mixture preferably range from 1:0.002 to 1:800, preferably from 1: 0.003 to 1:250, particularly preferably from 1:0.003 to 1:160, especially from 1:0.02 to 1:250, especially preferably from 1:0.02 to 1:160.

The rate of application of pure synergistic herbicidal mixture, i.e. without formulation auxiliaries, amounts to 0.2 to 5000 g/ha, preferably to 2 to 2000 g/ha, in particular to 5 to 1500 g/ha, especially to 8 to 1500 g/ha, of active substance (a.s.), depending on the intended aim, the season, the target plants and growth stage.

The rate of application of 3-heterocyclyl-substituted benzoyl derivative of the formula I is 0.1 to 250 g/ha, as a rule 1 to 250 g/ha, preferably 5 to 250 g/ha, especially 10 to 150 g/ha, of active substance (a.s.).

The preferred rate of application of component B) is 0.1 to 500 g/ha, as a rule 1 to 250 g/ha, preferably 10 to 250 g/ha, of active substance (a.s.)

The preferred application rate of the active ingredients of the optional component C are compiled in Table 2.

Table 2

| Component C | Class of active ingredient | Active ingredient | Rate of application (g/ha) |
|---|---|---|---|
| C1 acetyl-CoA carboxylase inhibitors | | | 25-400 |
| | cyclohexenone oxime ethers | | 100-400 |

(continued)

| Component C | Class of active ingredient | Active ingredient | Rate of application (g/ha) |
|---|---|---|---|
| | | cycloxydim | 100-400 |
| | | sethoxydim | 100-400 |
| | | tralkoxydim | 100-400 |
| | phenoxyphenoxypropionic esters | | 25-300 |
| | | clodinafpop-P-propargyl[a] | 25-100 |
| | | fenoxaprop-ethyl | 50-300 |
| | | fenoxaprop-P-ethyl | 25-150 |
| C2 acetolactate synthase inhibitors (ALS) | | | 1-800 |
| | imidazolinones | | 20-800 |
| | | imazapyr | 30-400 |
| | | imazaquin | 50-300 |
| | | imazamethabenz | 100-800 |
| | | imazapic | 20-800 |
| | | imazethapyr | 30-150 |
| | | imazamox | 20-120 |
| | pyrimidyl ethers | | 2-120 |
| | | pyrithiobac-sodium | 2-120 |
| | sulfonamides | | 1-225 |
| | | florasulam | 1-20 |
| | | flumetsulam | 2-225 |
| | | metosulam | 1-60 |
| | sulfonylureas | | 1-120 |
| | | halosulfuron-methyl | 5-120 |
| | | nicosulfuron | 1-120 |
| | | primisulfuron-methyl | 10-120 |
| | | prosulfuron | 10-120 |
| | | rimsulfuron | 5-120 |
| | | thifensulfuron-methyl | 10-60 |
| | | tribenuron-methyl | 10-60 |
| | | N-[[[4-methoxy-6-(trifluoromethyl)-1,3,5-triazin-2-yl]-amino] carbonyl]-2-(trifluoromethyl) benzenesulfonamide | 5-120 |
| | | sulfosulfuron | 10-60 |
| C3 amides | | | 250-2000 |
| | - | fluthiamide | 250-2000 |

(continued)

| Component C | Class of active ingredient | Active ingredient | Rate of application (g/ha) |
|---|---|---|---|
| C4 auxin herbicides | | | 25-750 |
| | pyridinecarboxylic acids | | 25-750 |
| | | clopyralid | 25-750 |
| | - | 2,4-D | 50-750 |
| C5 auxin transport inhibitors | | | 15-100 |
| | - | diflufenzopyr | 15-100 |
| C6 carotenoid biosynthesis inhibitors | | | 25-600 |
| | - | isoxaflutole | 25-200 |
| | - | sulcotrione | 100-600 |
| | - | mesotrione | 25-300 |
| | - | isoxachlortole | 25-200 |
| | - | ketospiradox | 25-300 |
| C7 enolpyruvylshikimat-3-phosphate synthase inhibitors (EPSPS) | | | 360-1080 |
| | - | glyphosate | 360-1080 |
| | - | sulfosate | 360-1080 |
| C8 glutamine synthetase inhibitors | | | 10-600 |
| | - | glufosinate-ammonium | 10-600 |
| C9 lipid biosynthesis inhibitors | | | 60-4000 |
| | chloroacetanilides | | 60-4000 |
| | | dimethenamid | 60-2000 |
| | | S-dimethenamid | 60-2000 |
| | | acetochlor | 250-4000 |
| | | metolachlor | 60-4000 |
| | | S-metolachlor | 60-4000 |
| | thioureas | | 100-4000 |
| | | benthiocarb | 1000-4000 |
| C10 mitosis inhibitors | | | 375-3000 |
| | dinitroanilines | | 375-3000 |
| | | pendimethalin | 375-3000 |
| C11 protoporphyrinogen IX oxidase inhibitors | | | 0.5-600 |
| | diphenyl ethers | | 50-300 |
| | | acifluorfen | 50-300 |
| | | acifluorfen-sodium | 50-300 |
| | oxadiazoles | | 50-600 |

(continued)

| Component C | Class of active ingredient | Active ingredient | Rate of application (g/ha) |
|---|---|---|---|
| | | oxadiargyl | 50-600 |
| | cyclic imides | | 0.5-300 |
| | | carfentrazone-ethyl | 0.5-35 |
| | | cinidon-ethyl | 3-35 |
| | | flumiclorac-pentyl | 3-35 |
| | | butafenacil | 5-300 |
| | | JV 485 | 50-300 |
| C12 photosynthesis inhibitors | | | 30-4000 |
| | - | pyridate | 250-1500 |
| | | pyridafol | 250-1000 |
| | benzothiadiazinones | | 480-1440 |
| | | bentazone | 480-1440 |
| | dipyridylenes | | 100-800 |
| | | paraquat-dichloride | 100-800 |
| | ureas | | 250-1600 |
| | | diuron | 250-1600 |
| | | isoprotoron | 250-1600 |
| | phenols | | 100-700 |
| | | bromoxynil | 100-700 |
| | chloridazon | | 500-4000 |
| | triazines | | 25-4000 |
| | | atrazine | 25-4000 |
| | | terbutylazine | 125-4000 |
| | triazinone | | 30-300 |
| | | metribuzin | 30-300 |
| C13 synergists | | | 500-1500 |
| | oxiranes | | 500-1500 |
| | | tridiphane | 500-1500 |
| C14 growth substances | | | 25-1200 |
| | aryloxyalkanoic acids | | 50-1200 |
| | | fluoroxypyr | 50-400 |
| | | MCPA | 400-1200 |
| | | mecoprop-P | 400-1200 |
| | benzoic acids | | 75-800 |
| | | dicamba | 75-800 |
| | quinolinecarboxylic acids | | 25-600 |
| | | quinclorac | 25-600 |

(continued)

| Component C | Class of active ingredient | Active ingredient | Rate of application (g/ha) |
|---|---|---|---|
| C16 various other herbicides | - | triaziflam | 50-750 |
| [a] If appropriate, 10-50 g/ha Cloquintocet may also be added. | | | |

Use examples

The mixtures according to the invention were applied pre- or post-emergence (foliar treatment). The herbicidal compounds of component B and, if desired, of component C were applied in the formulation in which they are present as commercially available product.

The herbicidally active compounds of components A), B) and, if desired, C) were applied in succession or jointly, in the latter case in some cases as a tank mix and in some cases as a ready-mix, in the form of emulsions, aqueous solutions or suspensions, the vehicle being water (300 - 400 1/ha). In the case of the field trials, application was effected with the aid of a mobile plot sprayer.

The test period extended over 3 to 8 weeks, and the stands were also observed at later points in time.

Damage by the herbicidal compositions was evaluated with reference to a scale of 0% to 100% in comparison with untreated control plots. 0 means no damage and 100 means complete destruction of the plants.

The following examples will demonstrate the action of the herbicidal compositions which can be used according to the invention, without excluding the possibility of other uses.

In these examples, the value E at which only an additive effect of the individual active ingredients is to be expected was calculated by the method of S. R. Colby (Calculating synergistic and antagonistic responses of herbicide combinations, Weeds 15, 20 pp (1967)).

This was done using the formula

$$E = X + Y - \frac{XY}{100}$$

where

X = Percentage of the herbicidal action of component X) at an application rate of x;

Y = Percentage of the herbicidal action of component Y) at an application rate of y;

E = expected herbicidal action of component X) + Y) at rates of application x + y (in %).

If the value observed exceeds the value E calculated in accordance with Colby's formula, then synergism is present.

The herbicidal mixtures according to the invention exert a greater herbicidal action than would have been expected according to Colby on the basis of the observed effects of the individual components when used alone.

The results of the tests are shown in Tables 3 to 12 below.

In these studies, the following plants were used:

| Scientific name | Common name |
|---|---|
| Abutilon theophrasti | Velvetleaf |
| Brachiaria plantaginea | Alexandergrass |
| Echinochloa crus-galli | Barnyardgrass |
| Galium aparine | Catchweed |
| Pharbitis purpurea | Morningglory |
| Polygonum persicaria | Ladysthumb |

(continued)

| Scientific name | Common name |
|---|---|
| Setaria faberi | Faber's foxtail |

Table 3: Herbicidal action of compound 1a.29 compound IIa and compound IIb (post-emergence treatment; greenhouse)

| | Application rate [g/ha ai] | Echinochloa crus-galli | Colby Value E |
|---|---|---|---|
| | | Damage [%] | |
| Ia.29 + IIb | 3.91 + 125 | 60 | |
| IIa | 3.91 | 25 | |
| Ia.29 + IIb + IIa | 3.91 + 125 + 3.91 | 85 | 70 |

Table 4: Herbicidal action of compound 1a.29 compound IIa and compound IIb (post-emergence treatment; greenhouse)

| | Application rate [g/ha ai] | Setaria faberi | Colby Value E |
|---|---|---|---|
| | | Damage [%] | |
| Ia.29 + IIa | 7.81 + 7.81 | 90 | |
| IIb | 250 | 20 | |
| Ia.29 + IIa + IIb | 7.81 + 7.81 + 250 | 98 | 92 |

Table 5: Herbicidal action of compound 1a.29 compound IIa and compound IIb (post-emergence treatment; greenhouse)

| | Application rate [g/ha ai] | Setaria faberi | Colby Value E |
|---|---|---|---|
| | | Damage [%] | |
| Ia.29 + IIa | 3.91 + 3.91 | 85 | |
| IIb | 125 | 20 | |
| Ia.29 + IIa + IIb | 3.91 + 3.91 + 125 | 95 | 88 |

Table 6: Herbicidal action of compound 1a.29, compound IIb and atrazine (post-emergence treatment; greenhouse)

| | Application rate [g/ha ai] | Brachiaria plantaginea | Colby Value E | Abutilon theophrasti | Colby Value E |
|---|---|---|---|---|---|
| | | Damage [%] | | Damage [%] | |
| Ia.29 + IIb | 7.81 + 250 | 85 | | 80 | |
| atrazine | 125 | 25 | | 30 | |
| Ia.29 + IIb + atrazine | 7.81 + 250 + 125 | 100 | 89 | 98 | 86 |

Table 7: Herbicidal action of compound Ia.29, compound IIb and atrazine (post-emergence treatment; greenhouse)

| | Application rate [g/ha ai] | Galium aparine | Colby Value E |
|---|---|---|---|
| | | Damage [%] | |
| Ia.29 + IIb | 7.81 + 250 | 80 | |
| atrazine | 125 | 60 | |
| Ia.29 + IIb + atrazine | 7.81 + 250 + 125 | 100 | 92 |

Table 8: Herbicidal action of compound 1a.29, compound IIb and atrazine (post-emergence treatment; greenhouse)

| | Application rate [g/ha ai] | Polygonum persicaria | Colby Value E |
|---|---|---|---|
| | | Damage [%] | |
| Ia.29 + IIb | 3.91 + 125 | 30 | |
| atrazine | 62.5 | 40 | |
| Ia.29 + IIb + atrazine | 3.91 + 125 + 62.5 | 98 | 58 |

Table 9: Herbicidal action of compound 1a.29, compound IIb and atrazine (post-emergence treatment; greenhouse)

| | Application rate [g/ha ai] | Setaria faberi | Colby Value E | Pharbitis purpurea | Colby Value E |
|---|---|---|---|---|---|
| | | Damage [%] | | Damage [%] | |
| Ia.29 + Iib | 1.95 + 62.5 | 85 | | 70 | |
| atrazine | 31.2 | 30 | | 60 | |
| Ia.29 + IIb + atrazine | 1.95 + 62.5 + 31.2 | 98 | 90 | 100 | 88 |

Table 10: Herbicidal action of compound 1a.29, compound IIb and atrazine (post-emergence treatment; greenhouse)

| | Application rate [g/ha ai] | Polygonum persicaria | Colby Value E |
|---|---|---|---|
| | | Damage [%] | |
| Ia.29 + Iib | 1.95 + 62.5 | 75 | |
| atrazine | 31.2 | 30 | |
| Ia.29 + IIb + atrazine | 1.95 + 62.5 + 31.2 | 95 | 83 |

## Claims

**1.** A synergistic herbicidal mixture comprising

A) at least one 3-heterocyclyl-substituted benzoyl derivative of the formula I

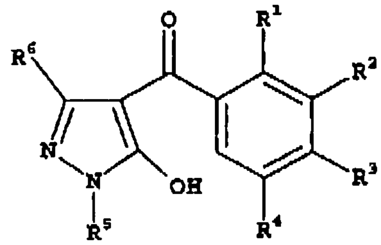

I

in which the variables have the following meanings:

$R^1$, $R^3$ are halogen, $C_1$-$C_6$-alkyl, $C_1$-$C_6$-haloalkyl, $C_1$-$C_6$-alkoxy, $C_1$-$C_6$-halcalkoxy, $C_1$-$C_6$-alkylthio, $C_1$-$C_6$-alkylsulfinyl or $C_1$-$C_6$-alkylsulfonyl;
$R^2$ is a heterocyclic radical selected from the group: isoxazol-3-yl, isoxazol-4-yl, isoxazol-5-yl, 4,5-dihydroisoxazol-3-yl, 4,5-dihydroiaoxazol-4-yl and 4,5-dihydroieoxazol-5-yl, it being possible for the six radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio;
$R^4$ is hydrogen, halogen or $C_1$-$C_6$-alkyl;
$R^5$ is $C_1$-$C_6$-alkyl;
$R^6$ is hydrogen or $C_1$-$C_6$-alkyl;

or one of its environmentally compatible salts;
and
B) the compound of formula IIb

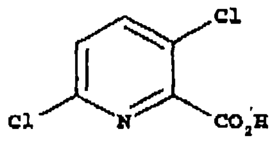

IIb

or one of its environmentally compatible salts;
and
C) at least one herbicidal compound from the group of the acetyl-CoA carboxylase inhibitors (ACC), acetolactate synthase inhibitors (ALS), amides, auxin herbicides, auxin transport inhibitors, carotenoid biosynthesis inhibitors, enolpyruvylehikimate 3-phoaphate aynthase inhibitors (EPSPS), glutamine synthetase inhibitors, lipid biosynthesis inhibitors, mitosis inhibitors, protoporphyrinogen IX oxidase inhibitors, photosynthesis inhibitors, synergists, growth substances, cell wall biosynthesis inhibitors and a variety of other herbicides;

in a synergistically effective amount.

**2.** A synergistic herbicidal mixture as claimed in claim 1, comprising, as component A), a 3-heterocyclyl-substituted benzoyl derivative of the formula I, where $R^4$ is hydrogen.

**3.** A synergistic herbicidal mixture as claimed in any of claims 1 to 2, comprising, as component A), a 3-heterocyclyl-substituted benzoyl derivative of the formula I, where

$R^1$ is halogen, $C_1$-$C_6$-alkyl or $C_1$-$C_6$-alkylsulfonyl;
$R^3$ is halogen or $C_2$-$C_6$-alkylsulfonyl;

**4.** A synergistic herbicidal mixture as claimed in any of claims 1 to 3, comprising, as component A), a 3-heterocyclyl-substituted benzoyl derivative of the formula I, where

$R^2$ is a heterocyclic radical selected from the group: isoxazol-3-yl, isoxazol-5-yl and 4,5-dihydraisoxazol-3-yl,

it being possible for the three radicals mentioned to be unsubstituted or mono- or polysubstituted by halogen, $C_1$-$C_4$-alkyl, $C_1$-$C_4$-alkoxy, $C_1$-$C_4$-haloalkyl, $C_1$-$C_4$-haloalkoxy or $C_1$-$C_4$-alkylthio.

**5.** A synergistic herbicidal mixture as claimed in any of claims 1 to 4, comprising, as component A), a 3-heterocyclyl-substituted benzoyl derivative of the formula I, where

$R^2$ is isoxazol-5-yl, 3-methyl-isoxazol-5-yl, 4,5-dihydroisaxazol-3-yl, 5-methyl-4,5-dihydroisoxazol-3-yl, 5-ethyl-4,5-dihydroisoxazol-3-yl or 4,5-dimethyl-4,5-dihydroisoxazol-3-yl.

**6.** A synergistic herbicidal mixture as claimed in any of claims 1 to 5, comprising, as component A), 4-[2-chloro-3-(4,i-di-hydroisoxazol-3-yl)-4-methylsulfonyl-benzoyl]-1-methyl-5-hydroxy-1H-pyrazole.

**7.** A synergistic herbicidal mixture as claimed in any of claims 1 to 5, comprising, as component A) 4-[2-methyl-3-(4,5-di-hydroisoxazol-3-yl)-4-methylsulfonyl-benzoyl]-1-methyl-5-hydroxy-1H-pyrazole.

**8.** A synergistic herbicidal mixture as claimed in any of claims 1 to 7, comprising, three active ingredients, a 3-heterocyclyl-substituted benzoyl derivative of the formula I (component A) as claimed in claims 1 to 7 and as component B the compound of formula IIb and
the compound of formula IIa

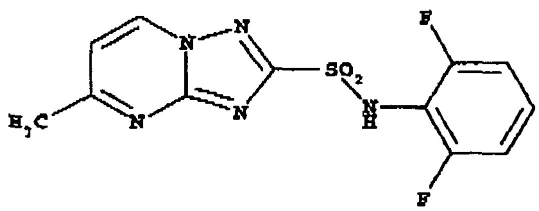

IIa

**9.** A synergistic herbicidal mixture as claimed in claim 8, comprising as component A) 4-[2-methyl-3-(4,5-dihydroisoxazol-3-yl)-4-methylsulfonyl-benzoyl]-1-methyl-5-hydroxy-1H-pyrazole and as component B)
the compound of formula IIb and
the compound of formula IIa

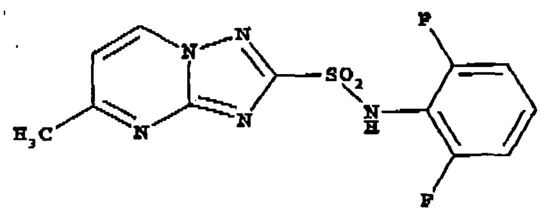

IIa

**10.** A synergistic herbicidal mixture as claimed in claim 1 to 7 comprising, as component. C), at least one herbicidal compound from the groups C1 to C16:

C1 acetyl-CoA carboxylase inhibitors (ACC):

cyclohexenone oxime ethers, phenoxyphenoxypropionic esters or arylaminopropionic acids;

C2 acetolactate synthase inhibitors (ALS):

imidazolinones, pyrimidyl ethers, sulfonamides or sulfonylureas;

C3 amides;
C4 auxin herbicides:

pyridinecarboxylic acids, 2,4-D or benazolin;

C5 auxin transport inhibitors;
C6 carotenoid biosynthesis inhibitors;
C7 enolpyruvylehikimate 3-phosphate synthase inhibitors (EPSPS);
C8 glutamine synthetase inhibitors;
C9 lipid biosynthesis inhibitors:

anilides, chloroacetanilides, thioureas, benfuresate or perfluidone;

C10 mitosis inhibitors:

carbamates, dinitroanilines, pyridines, butamifos, chlorthal-dimethyl (DCPA) or maleic hydrazide;

C11 protoporphyrinogen IX oxidase inhibitors:

diphenyl ethers, oxadiazoles, cyclic imides or pyrazoles;

C12 photosynthesis inhibitors:

propanil, pyridate, pyridafol, benzothiadiazinones, dinitrophenols, dipyridylenes, ureas, phenols, chloridazon, triazines, triazinones, uracils or biscarbamates;

C13 synergists:

oxiranes;

C14 growth substances:

aryloxyalkanoic acids, benzoic acids or quinolinecarboxylic acids;

C15 cell wall synthesis inhibitors:
C16 various other herbicides:

dichloropropionic acids, dihydrobenzofurans, phenylacetic acids or aziprotryn, barban, benaulide, benzthiazuron, benzofluor, buminafos, buthidazole, buturon, cafenstrole, chlorbufam, chlorofenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, ieopropalin, karbutilate, mefluidide, monuron, napropamide, napropanilide, nitralin, oxaciolomefone, phenisapham, piperophos, procyazine, profluralin, pyributicarb, secbumeton, sulfallate (CDEC), terbucarb, triaxofenamide, triaziflam or trimeturon;

or their environmentally compatible salts.

**11.** A synergistic herbicidal mixture as claimed in claims 1 to 7 comprising, as component C), at least one herbicidal compound from the groups C1 to C16:

C1 acetyl-CoA carboxylase inhibitors (ACC):

- cyclohexenone oxime ethers:

alloxydim, clethodim, cloproxydim, cycloxydim, sethoxydim, tralkoxydim, butroxydim, clefoxydim or tepraloxydim;

- phenoxyphenoxypropionic esters:

clodinafop-propargyl (and, if appropriate, cloquintocet), cyhalofop-butyl, diclofop-methyl, fenoxaprop-ethyl, fenoxaprop-P-ethyl, fenthiapropethyl, fluazifop-butyl, fluazifop-P-butyl, haloxyfop-ethoxyethyl,

haloxyfop-methyl, haloxyfop-P-methyl, isoxapyrifop, propaquizafop, quizaiofop-ethyl, quizalofop-P-ethyl or quizalofop-tefuryl; or

- arylaminopropionic acids:

flamprop-methyl or flamprop-isopropyl;

C2 acetolactate synthase inhibitors (ALS):

- imidazolinenes;

imazapyr, imazaquin, imazamethabenz-methyl (imazame), imazamox, imazapic, imazethapyr or imazamethapyr;

- pyrimidyl ethers:

pyrithiobac-acid, pyrithiobac-sodium, bispyribac-sodium, KIH-6127 or pyribenzoxym;

- sulfonamides:

florasulam, flumetsulam or metosulam; or

- sulfonylureas:

amidosulfuron, azimsulfuron, bensulfuron-methyl, chlorimuron-ethyl, chlorsulfuron, cinosulfuron, cycloaulfamuron, ethametsulfuron-methyl, ethoxysulfuron, flazasulfuron, halosulfuron-methyl, imazosulfuron, metsulfuron-mathyl, nicoaulfuron, primisulfuron-methyl, prosulfuron, pyrazosulfuron-ethyl, rimsulfuron, sulfometuron-methyl, thifensulfuron-methyl, triasulfuron, tribenuron-methyl, triflusulfuron-methyl, N-[[[4-methoxy-6-(trifluoromethyl)-1,3,5-triazin-2-yl]amino]-carbonyl]-2-(trifluoromethyl)-benzenesulfonamide, sulfosulfuron or iodoeulfuron;

C3 amides:

- allidochlor (CDAA), benzoylprop-ethyl, bromobutide, chlorthiamid, diphenamid, etobenzanid (benzchlomet), fluthiamide, fosamin or monalide;

C4 auxin herbicides:

- pyridine carboxylic acids: clopyralid or picloram; or
- 2,4-D or benazolin;

C5 auxin transport inhibitors:

- naptalame or diflufenzopyr;

C6 carotenoid biosynthesis inhibitors:

- benzofenap, clomazone (dimethazone), diflufenican, fluorochloridone, fluridone, pyrazolynate, pyrazoxyfen, isoxaflutole, isoxachlortole, mesotrione, sulcotrione (chlormesulone), ketospiradox, flurtamone, norflurazon or amitrol;

C7 enolpyruvylahikimate-3-phosphate synthase inhibitors (EPSPS) :

- glyphosate or sulfosate;

C8 glutamine synthetase inhibitors:

- bilanafos (bialaphos) or glufasinate-ammonium;

C9 lipid biosynthesis inhibitors:

- anilidea:

  anilofos or mefenacet;

- chloroacetanilides:

  dimethenamid, S-dimethenamid, acetochlor, alachlor, butachlor, butenachlor, diethatyl-ethyl, dimethachlor, metazachlor, metolachlor, S-metolachlor, pretilachlor, propachlor, prynachlor, terbuchlor, thenylchlor or xylachlor;

- thioureas:

  butylate, cycloate, di-allate, dimepiperate, EPTC, esprocarb, molinate, pebulate, prosulfocarb, thiobencarb (benthiocarb), tri-allate or vernolate; or

- benfuresate or perfluidone;

C10 mitosis inhibitors:

- carbamates:

  asulam, carbetamid, chlorpropham, orbencarb, pronamid (propyzamid), propham or tiocarbazil;

- dinitroanilines:

  benefin, butralin, dinitramin, ethalfluralin, fluchloralin, oryzalin, pendimethalin, prodiamine or trifluralin;

- pyridines:

  dithiopyr or thiazopyr; or

- butamifos, chlorthal-dimethyl (DCPA) or maleic hydrazide;

C11 protoporphyrinogen IX oxidase inhibitors:

- diphenyl ethers:

  acifluorfen, acifluorfen-sodium, aclonifen, bifenox, chlornitrofen (CNP), ethoxyfen, fluorodifen, fluoroglycofen-ethyl, fomesafen, furyloxyfen, lactafen, nitrofen, nitrofluorfen or oxyfluorfen;

- oxadiazoles:

  oxadiargyl or oxadiazon;

- cyclic imides:

  azafenidin, butafenacil, carfentrazone-ethyl, cinidon-ethyl, flumiclorac-pentyl, flumioxazin, flumipropyn, flupropacil, fluthiacet-methyl, sulfentrazone or thidiazimin; or

- pyrazoles:

  ET-751, JV 485 or nipyraclofen;

C12 photosynthesis inhibitors:

- propanil, pyridate or pyridafol;

- benzothiadiazinones:

bentazone;

- dinitrophenols:

bromofenoxim, dinoseb, dinoseb-acetate, dinoterb or DNOC;

- dipyridylenes:

cyperquat-chloride, difenzoquat-methylsulfate, diquat or paraquat-dichloride;

- ureas:

chlorbromuron, chlorotoluron, difenoxuron, dimefuron, diuron, ethidimuron, fenuron, fluometuron, isoproturon, isouron, linuron, methabenzthiazuron, methazole, metobenzuron, metoxuron, monolinuron, neburon, siduron or tebuthiuron;

- phenols:

bromoxynil or ioxynil;

- chloridazon;
- triazines:

ametryn, atrazine, cyanazine, deemetryn, dimethamethryn, hexazinone, prometon, prometryn, propazine, simazine, simetryn, terbumeton, terbutryn, terbutylazine or trietazine;

- triazinones:

metamitron or metribuzine;

- uracils:

bromacil, lenacil or terbacil; or

- biscarbamates:

desmedipham or phenmedipham;

C13 synergists:

- oxiranes:

tridiphane;

C14 growth substances:

- aryloxyalkanoic acids:

2,4-DB, clomeprop, dichlorprop, dichlorprop-P (2,4-DP-P), fluoroxypyr, MCPA, MCPB, mecoprop, mecoprop-P, or triclopyr;

- benzoic acids:

chloramben or dicamba; or

- quinolinecarboxylic acids:

quinclorac or quinmerac;

C15 cell wall synthesis inhibitors:

- isoxaben or dichlobenil;

C16 various other herbicides:

- dichloropropionic acids:

dalapon;
dihydrobenzofurans:
ethofumesate;

- phenylacetic acids:

chlorfenac (fenac); or

- aziprotryn, barban, bensulide, benzthiazuron, benzofluor, buminafos, buthidazole, buturon, cafenatrole, chlorbufam, chlorfenprop-methyl, chloroxuron, cinmethylin, cumyluron, cycluron, cyprazine, cyprazole, dibenzyluron, dipropetryn, dymron, eglinazin-ethyl, endothall, ethiozin, flucabazone, fluorbentranil, flupoxam, isocarbamid, isopropalin, karbutilate, mefluidide, monuron, napropamide, napropanilide, nitralin, oxaciclomefone, phenisopham, piperophos, procyazine, prpfluralin, pyributicarb, secbumeton, sulfallate (CDEC), terbucarb, triazofenamid, triaziflan or trimeturon;

or their environmentally compatible salts.

**12.** A synergistic herbicidal mixture as claimed in 10, comprising, as component C), at least one herbicidal compound from the groups C5, C9 or C 12.

**13.** A synergistic herbicidal mixture as claimed in 12, comprising, as component C), at least one herbicidal compound from the groups C9 or C 12.

**14.** A synergistic herbicidal mixture as claimed in claim 12 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) a herbicidal compound from the group C5.

**15.** A synergistic herbicidal mixture as claimed in claim 14 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) diflufenzopyr.

**16.** A synergistic herbicidal mixture as claimed in claim 12 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) a herbicidal compound from the group C9.

**17.** A synergistic herbicidal mixture as claimed in claim 16, comprising, as component A) 4-[2-methyl-3-(4,5-dihydroisoxazol-3-yl)-4-methylsulfonyl-benzoyl]-1-methyl-5-hydraxy-1H-pyrazole, as component B) the compound of formula IIb, and as component C) an a chloroacetanilide.

**18.** A synergistic herbicidal mixture as claimed in claim 16, comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) acetochlor.

**19.** A synergistic herbicidal mixture as claimed in claim 12 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) a herbicidal compound from the group C12.

**20.** A synergistic herbicidal mixture as claimed in claim 19 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) a triazine from group C12.

**21.** A synergistic herbicidal mixture as claimed in claim 20, comprising as component A) 4-[2-methyl-3-(4,5-dihydroisoxazol-3-yl) -4-methylsulfonyl-benzoyl]-1-methyl-5-hydroxy-1H-pyrazole, as component B) the compound of formula IIb, and as component C) atrazine.

**22.** A synergistic herbicidal mixture as claimed in claim 12 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) a herbicidal compound from the group C5 and a herbicidal compound from the group C12.

**23.** A synergistic herbicidal mixture as claimed in claim 22 comprising, as component A) 4-[2-methyl-3-(4,5-dihydroisoxazol-3-yl)-4-methylsulfonyl-benzoyl]-1-methyl-5-hydroxyl-1H-pyrazole, as component B) the compound of formula IIb, and as component C) an auxin transport inhibitor and a triazine.

**24.** A synergistic herbicidal mixture as claimed in claim 23 comprising, as component A) 4-[2-methyl-3-(4,5-dihydroisoxazol-3-yl)-4-methylsulfonyl-benzoyl]-1-methyl-5-hydroxy-1H-pyrazole, as component B) the compound of formula IIb, and as component C) andiflufenzopyr and atrazine.

**25.** Synergistic herbicidal mixture as claimed in any of claims 1 to 24, wherein component A) and B) are present in a weight ratio of 1:0.001 to 1:500.

**26.** Synergistic herbicidal mixture as claimed in any of claims 1 to 24, wherein component A) and component C) are present in a weight ratio of 1:0.002 to 1:800.

**27.** A herbicidal composition comprising a herbicidally active amount of a synergistic herbicidal mixture as claimed in any of claims 1 to 24, at least one inert liquid and/or solid carrier and, if desired, at least one surfactant.

**28.** A process for the preparation of herbicidal compositions as claimed in claim 27, wherein component A), component B), if desired, component C), at least one inert liquid and/or solid carrier and, if appropriate, a surfactant are mixed.

**29.** A method of controlling undesired vegetation, which comprises applying a synergistic herbicidal mixture as claimed in any of claims 1 to 26 before, during and/or after the emergence of undesired plants, it being possible for the herbicidally active compounds of components A), B) and, if desired, C) to be applied simultaneously or in succession.

**30.** A method of controlling undesired vegetation as claimed in claim 29, wherein the leaves of the crop plants and of the undesired plants are treated.

## Patentansprüche

**1.** Synergistische herbizide Mischung, enthaltend

A) mindestens ein 3-heterocyclyl-substituiertes Benzoylderivat der Formel I

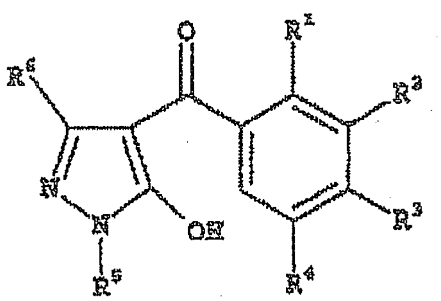

I

in der die Variablen die folgende Bedeutung haben:

$R^1$, $R^3$ Halogen, $C_1$-$C_6$-Alkyl, $C_1$-$C_6$-Halogenalkyl, $C_1$-$C_6$-Alkoxy, $C_1$-$C_6$-Halogenalkoxy, $C_1$-$C_6$-Alkylthio, $C_1$-$C_6$-Alkylsulfinyl oder $C_1$-$C_6$-Alkylsulfonyl;
$R^2$ ein heterocyclischer Rest ausgewählt aus der Gruppe: Isoxazol-3-yl, Isoxazol-4-yl, Isoxazol-5-yl, 4,5-Dihydroisoxazol-3-yl, 4,5-Dihydroisoxazol-4-yl und 4,5-Dihydroisoxazol-5-yl, wobei die sechs genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können;
$R_4$ Wasserstoff, Halogen oder $C_1$-$C_6$-Alkyl;
$R_5$ $C_1$-$C_6$-Alkyl;
$R_6$ Wasserstoff oder $C_1$-$C_6$-Alkyl;

oder eines seiner umweltverträglichen Salze;
und
B) die Verbindung der Formel IIb

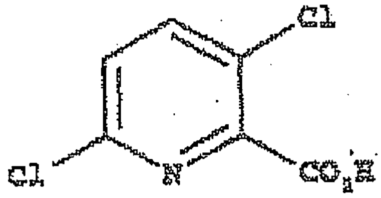

IIb

oder eines ihrer umweltverträglichen Salze;
und
C) mindestens eine herbizide Verbindung aus der Gruppe der Acetyl-CoA-Carboxylase-Inhibitoren (ACC), Acetolactatsynthase-Inhibitoren (ALS), Amide, Auxin-Herbizide, Auxin-Transport-Hemmer, Carotenoid-Biosynthese-Inhibitoren, Enolpyruvyl-Shikimat-3-Phosphat-Synthase-Inhibitoren (EPSPS), Glutamin-Synthetase-Inhibitoren, Lipidbiosynthese-Inhibitoren, Mitose-Inhibitoren, Protoporphyrinogen-Ix-Oxidase-Inhibitoren, Photosynthese-Inhibitoren, Synergisten, Wuchsstoffe, Zellwandbiosynthese-Inhibitoren und verschiedenen weiteren Herbiziden

in einer synergistisch wirksamen Menge.

**2.** Synergistische herbizide Mischung nach Anspruch 1, enthaltend als Komponente A) ein 3-heterocyclyl-substituiertes Benzoylderivat der Formel I, wobei $R^4$ Wasserstoff bedeutet.

**3.** Synergistische herbizide Mischung nach Anspruch 1 oder 2, enthaltend als Komponente A) ein 3-heterocyclyl-substituiertes Benzoylderivat der Formel I, wobei

$R^1$ Halogen, $C_1$-$C_6$-Alkyl oder $C_1$-$C_6$-Alkylsulfonyl bedeutet;
$R^3$ Halogen oder $C_1$-$C_6$-Alkylsulfonyl bedeutet.

**4.** Synergistische herbizide Mischung nach den Ansprüchen 1 bis 3, enthaltend als Komponente A) ein 3-heterocyclyl-substituiertes Benzoylderivat der Formel I, wobei

$R^2$ einen heterocyclischen Rest ausgewählt aus der Gruppe: Isoxazol-3-yl, Isoxazol-5-yl und 4,5-Dihydroisoxazol-3-yl, wobei die drei genannten Reste gegebenenfalls einfach oder mehrfach durch Halogen, $C_1$-$C_4$-Alkyl, $C_1$-$C_4$-Alkoxy, $C_1$-$C_4$-Halogenalkyl, $C_1$-$C_4$-Halogenalkoxy oder $C_1$-$C_4$-Alkylthio substituiert sein können, bedeutet.

**5.** Synergistische herbizide Mischung nach den Ansprüchen 1 bis 4, enthaltend als Komponente A) ein 3-heterocyclyl-substituiertes Benzoylderivat der Formel I, wobei

$R^2$ Isoxazol-5-yl, 3-Methylisoxazol-5-yl, 4,5-Dihydroisoxazol-3-yl, 5-Methyl-4,5-dihydroisoxazol-3-yl, 5-Ethyl-4,5-dihydroisoxazol-3-yl oder 4,5-Dimethyl-4,5-dihydroisoxazol-3-yl bedeutet.

**6.** Synergistische herbizide Mischung nach den Ansprüchen 1 bis 5, enthaltend als Komponente A) 4-[2-Chlor-3-(4,5-dihydroisoxazol-3-yl)-4-methylsulfonylbenzoyl]-1-methyl-5-hydroxy-1H-pyrazol.

**7.** Synergistische herbizide Mischung nach den Ansprüchen 1 bis 5, enthaltend als Komponente A) 4-[2-Methyl-3-(4,5-dihydroisoxazol-3-yl)-4-methylsulfonylbenzoyl]-1-methyl-5-hydroxy-1H-pyrazol.

**8.** Synergistische herbizide Mischung nach den Ansprüchen 1 bis 7, enthaltend drei Wirkstoffe:

ein 3-heterocyclyl-substituiertes Benzoylderivat der Formel I (Komponente A) nach Ansprüchen 1 bis 7 und als Komponente B die Verbindung der Formel IIb
und die Verbindung der Formel IIa

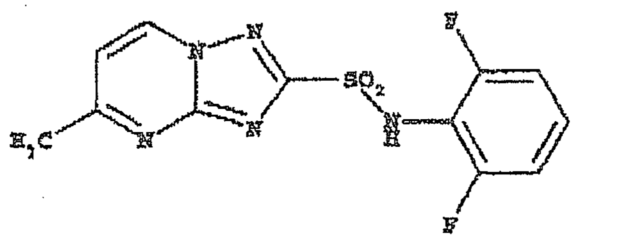

IIa

**9.** Synergistische herbizide Mischung nach Anspruch 8, enthaltend als Komponente A) 4-[2-Methyl-3-(4,5-dihydroisoxazol-3-yl)-4-methylsulfonylbenzoyl]-1-methyl-5-hydroxy-1H-pyrazol und als Komponente B die Verbindung der Formel IIb und die Verbindung der Formel IIa

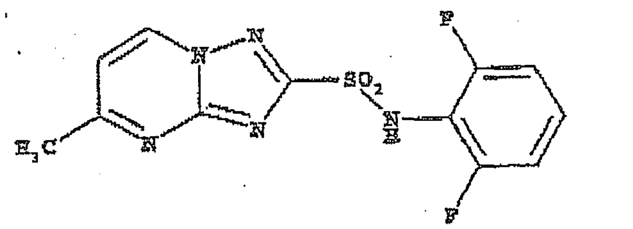

IIa

**10.** Synergistische herbizide Mischung nach den Ansprüchen 1 bis 7, enthaltend als Komponente C) mindestens eine herbizide Verbindung aus den Gruppen C1 bis C16:

C1 Acetyl-CoA-Carboxylase-Inhibitoren (ACC):

Cyclohexenonoximether, Phenoxyphenoxypropionsäureester oder Arylaminopropionsäuren;

C2 Acetolactatsynthase-Inhibitoren (ALS):

Imidazolinone, Pyrimidylether, Sulfonamide, oder Sulfonylharnstoffe;

C3 Amide;
C4 Auxin-Herbizide:

Pyridincarbonsäuren, 2,4-D oder Benazolin;

C5 Auxin-Transport-Hemmer;
C6 Carotenoid-Biosynthese-Inhibitoren;

C7 Enolpyruvyl-Shikimat-3-Phosphat-Synthase-Inhibitoren (EPSPS);
C8 Glutamin-Synthetase-Inhibitoren;
C9 Lipid-Biosynthese-Inhibitoren:

Anilide, Chloroacetanilide, Thioharnstoffe, Benfuresate oder Perfluidone;

C10 Mitose-Inhibitoren:

Carbamate, Dinitroaniline, Pyridine, Butamifos, Chlorthal-dimethyl (DCPA) oder Maleinsäurehydrazid;

C11 Protoporphyrinogen-IX-Oxidase-Inhibitoren:

Diphenylether, Oxadiazole, cyclische Imide oder Pyrazole;

C12 Photosynthese-Inhibitoren:

Propanil, Pyridate, Pyridafol, Benzothiadiazinone, Dinitrophenole, Dipyridylene, Harnstoffe, Phenole, Chloridazon, Triazine, Triazinone, Uracile oder Biscarbamate,

C13 Synergisten:

Oxirane;

C14 Wuchsstoffe:

Aryloxyalkansäuren, Benzoesäuren oder Chinolincarbonsäuren;

C15 Zellwandsynthese-Inhibitoren;
C16 Verschiedene weitere Herbizide:

Dichlorpropionsäuren, Dihydrobenzofurane, Phenylessigsäuren oder Aziprotryn, Barban, Bensulide, Benzthiazuron, Benzofluor, Buminafos, Buthidazole, Buturon, Cafenstrole, Chlorbufam, Chlorfenprop-methyl, Chloroxuron, Cinmethylin, Cumyluron, Cycluron, Cyprazine, Cyprazole, Dibenzyluron, Dipropetryn, Dymron, Eglinazine-ethyl, Endothall, Ethiozin, Flucabazone, Fluorbentranil, Flupoxam, Isocarbamid, Isopropalin, Karbutilate, Mefluidide, Monuron, Napropamide, Napropanilide, Nitralin, Oxaciclomefone, Phenisopham, Piperophos, Procyazine, Profluralin, Pyributicarb, Secbumeton, Sulfallate (CDEC), Terbucarb, Triazofenamid, Triaziflam oder Trimeturon;

oder deren umweltverträgliche Salze.

**11.** Synergistische herbizide Mischung nach den Ansprüchen 1 bis 7, enthaltend als Komponente C) mindestens eine herbizide Verbindung aus den Gruppen C1 bis C16:

C1 Acetyl-CoA-Carboxylase-Inhibitoren (ACC):

- Cyclohexenonoximether:

Alloxydim, Clethodim, Cloproxydim, Cycloxydim, Sethoxydim, Tralkoxydim, Butroxydim, Clefoxydim oder Tepraloxydim;

- Phenoxyphenoxypropionsäureester:

Clodinafop-propargyl (und gegebenenfalls Cloquintocet), Cyhalofop-butyl, Diclofop-methyl, Fenoxaprop-ethyl, Fenoxaprop-P-ethyl, Fenthiapropethyl, Fluazifop-butyl, Fluazifop-P-butyl, Haloxyfop-ethoxyethyl, Haloxyfop-methyl, haloxyfop-P-methyl, Isoxapyrifop, Propaquizafop, Quizalofop-ethyl, Quizalofop-P-ethyl oder Quizalofop-tefuryl; oder

- Arylaminopropionsäuren:

Flamprop-methyl oder Flamprop-isopropyl;

C2 Acetolactatsynthase-Inhibitoren (ALS):

- Imidazolinone:

  Imazapyr, Imazaquin, Imazamethabenz-methyl (Imazame), Imazamox, Imazapic, Imazethapyr oder Imazamethapyr;

- Pyrimidylether:

  Pyrithiobac-säure, Pyrithiobac-sodium, Bispyribac-sodium, KIH-6127 oder Pyribenzoxym;

- Sulfonamide:

  Florasulam, Flumetsulam oder Metosulam; oder

- Sulfonylharnstoffe:

  Amidosulfuron, Azimsulfuron, Bensulfuron-methyl, Chlorimuron-ethyl, Chlorsulfuron, Cinosulfuron, Cyclosulfamuron, Ethametsulfuron-methyl, Ethoxy-sulfuron, Flazasulfuron, Halosulfuron-methyl, Imazosulfuron, Metsulfuron-methyl, Nicosulfuron, Primisulfuron-methyl, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, N-[[[4-Methoxy-6-(trifluormethyl)-1,3,5-triazin-2-yl]amino]carbonyl]-2-(trifluormethyl) benzolsulfonamid, Sulfosulfuron oder Iodosulfuron;

C3 Amide:

- Allidochlor (CDAA), Benzoylprop-ethyl, Bromobutide, Chlorthiamid, Diphenamid, Etobenzanid (Benzchlomet), Fluthiamide, Fosamin oder Monalide;

C4 Auxin-Herbizide:

- Pyridincarbonsäuren:

  Clopyralid oder Picloram; oder

- 2,4-D oder Benazolin;

C5 Auxin-Transport-Hemmer:

- Naptalame oder Diflufenzopyr;

C6 Carotenoid-Biosynthese-Inhibitoren:

- Benzofenap, Clomazone (Dimethazone), Diflufenican, Fluorochloridone, Fluridone, Pyrazolynate, Pyrazoxyfen, Isoxaflutole, Isoxachlortole, Mesotrione, Sulcotrione (Chlormesulone), Ketospiradox, Flurtamone, Norflurazon oder Amitrol;

C7 Enolpyruvyl-Shikimat-3-Phosphat-Synthase-Inhibitoren (EPSPS):

- Glyphosate oder Sulfosate;

C8 Glutamin-Synthetase-Inhibitoren:

- Bilanafos (Bialaphos) oder Glufosinate-ammonium;

C9 Lipid-Biosynthese-Inhibitoren:

- Anilide:

  Anilofos oder Mefenacet;

- Chloracetanilide:

  Dimethenamid, S-Dimethenamid, Acetochlor, Alachlor, Butachlor, Butenachlor, Diethatyl-ethyl, Dimethachlor, Metazachlor, Metolachlor, S-Metolachlor, Pretilachlor, Propachlor, Prynachlor, Terbuchlor, Thenylchlor oder xylachlor;

- Thioharnstoffe:

  Butylate, Cycloate, Di-allate, Dimepiperate, EPTC, Esprocarb, Molinate, Pebulate, Prosulfocarb, Thiobencarb (Benthiocarb), Tri-allate oder Vernolate; oder

- Benfuresate oder Perfluidone;

C10 Mitose-Inhibitoren:

- Carbamate:

  Asulam, Carbetamid, Chlorpropham, Orbencarb, Pronamid (Propyzamid), Propham oder Tiocarbazil;

- Dinitroaniline:

  Benefin, Butralin, Dinitramin, Ethalfluralin, Fluchloralin, Oryzalin, Pendimethalin, Prodiamine oder Trifluralin;

- Pyridine:

  Dithiopyr oder Thiazopyr; oder

- Butamifos, Chlorthal-dimethyl (DCPA) oder Maleinsäurehydrazid;

C11 Protoporphyrinogen-IX-Oxidase-Inhibitoren:

- Diphenylether:

  Acifluorfen, Acifluorfen-sodium, Aclonifen, Bifenox, Chlornitrofen (CNP), Ethoxyfen, Fluorodifen, Fluoroglycofen-ethyl, Fomesafen, Furyloxyfen, Lactofen, Nitrofen, Nitrofluorfen oder Oxyfluorfen;

- Oxadiazole:

  Oxadiargyl oder Oxadiazon;

- cyclische Imide:

  Azafenidin, Butafenacil, Carfentrazone-ethyl, Cinidon-ethyl, Flumiclorac-pentyl, Flumioxazin, Flumipropyn, Flupropacil, Fluthiacet-methyl, Sulfentrazone oder Thidiazimin; oder

- Pyrazole:

  ET-751, JV 485 oder Nipyraclofen;

C12 Photosynthese-Inhibitoren:

- Propanil, Pyridate oder Pyridafol;
- Benzothiadiazinone:

Bentazone;

- Dinitrophenole:

Bromofenoxim, Dinoseb, Dinoseb-acetat, Dinoterb oder DNOC;

- Dipyridylene:

Cyperquat-chlorid, Difenzoquat-methylsulfat, Diquat oder Paraquat-dichlorid;

- Harnstoffe:

Chlorbromuron, Chlorotoluron, Difenoxuron, Dimefuron, Diuron, Ethidimuron, Fenuron, Fluometuron, Isoproturon, Isouron, Linuron, Methabenzthiazuron, Methazole, Metobenzuron, Metoxuron, Monolinuron, Neburon, Siduron oder Tebuthiuron;

- Phenole:

Bromoxynil oder Ioxynil;

- Chloridazon;
- Triazine:

Ametryn, Atrazine, Cyanazine, Desmetryn, Dimethamethryn, Hexazinon, Prometon, Prometryn, Propazine, Simazine, Simetryn, Terbumeton, Terbutryn, Terbutylazine oder Trietazine;

- Triazinone:

Metamitron oder Metribuzin;

- Uracile:

Bromacil, Lenacil oder Terbacil; oder

- Biscarbamate:

Desmedipham oder Phenmedipham;

C13 Synergisten:

- Oxirane:

Tridiphane;

C14 Wuchsstoffe:

- Aryloxyalkansäuren:

2,4-DB, Clomeprop, Dichlorprop, Dichlorprop-P (2,4-DP-P), Fluoroxypyr, MCPA, MCPB, Mecoprop, Mecoprop-P oder Triclopyr;

- Benzoesäuren:

Chloramben oder Dicamba; oder

- Chinolincarbonsäuren:

Quinclorac oder Quinmerac;

C15 Zellwandsynthese-Inhibitoren:

- Isoxaben oder Dichlobenil;

C16 Verschiedene weitere Herbizide:

- Dichlorpropionsäuren:

Dalapon;

- Dihydrobenzofurane:

Ethofumesate;

- Phenylessigsäuren:

Chlorfenac (Fenac); oder

- Aziprotryn, Barban, Bensulide, Benzthiazuron, Benzofluor, Buminafos, Buthidazole, Buturon, Cafenstrole, Chlorbufam, Chlorfenprop-methyl, Chloroxuron, Cinmethylin, Cumyluron, Cycluron, Cyprazine, Cyprazole, Dibenzyluron, Dipropetryn, Dymron, Eglinazin-ethyl, Endothall, Ethiozin, Flucabazone, Fluorbentranil, Flupoxam, Isocarbamid, Isopropalin, Karbutilate, Mefluidide, Monuron, Napropamide, Napropanilide, Nitralin, Oxaciclomefone, Phenisopham, Piperophos, Procyazine, Profluralin, Pyributicarb, Secbumeton, Sulfallate (CDEC), Terbucarb, Triazofenamid, Triaziflan oder Trimeturon;

oder deren umweltverträgliche Salze.

**12.** Synergistische herbizide Mischung nach Anspruch 10, enthaltend als Komponente C) mindestens eine herbizide Verbindung aus den Gruppen C5, C9 oder C12.

**13.** Synergistische herbizide Mischung nach Anspruch 12, enthaltend als Komponente C) mindestens eine herbizide Verbindung aus den Gruppen C9 oder C12.

**14.** Synergistische herbizide Mischung nach Anspruch 12, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) eine herbizide Verbindung aus der Gruppe C5.

**15.** Synergistische herbizide Mischung nach Anspruch 14, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) Diflufenzopyr.

**16.** Synergistische herbizide Mischung nach Anspruch 12, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) eine herbizide Verbindung aus der Gruppe C9.

**17.** Synergistische herbizide Mischung nach Anspruch 16, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) ein Chloracetanilid.

**18.** Synergistische herbizide Mischung nach Anspruch 16, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) Acetochlor.

**19.** Synergistische herbizide Mischung nach Anspruch 12, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) eine herbizide Verbindung aus der Gruppe C12.

**20.** Synergistische herbizide Mischung nach Anspruch 19, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) ein Triazin aus der Gruppe C12.

**21.** Synergistische herbizide Mischung nach Anspruch 20, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) Atrazine.

**22.** Synergistische herbizide Mischung nach Anspruch 12, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) eine herbizide Verbindung aus der Gruppe C5 und eine herbizide Verbindung aus der Gruppe C12.

**23.** Synergistische herbizide Mischung nach Anspruch 22, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) einen Auxin-Transport-Hemmer und ein Triazin.

**24.** Synergistische herbizide Mischung nach Anspruch 23, enthaltend als Komponente A) 4-[2-Methyl-3-(4,5-dihydroisoxazol-3-yl)-4-methylsulfonylbenzoyl]-1-methyl-5-hydroxy-1H-pyrazol, als Komponente B) die Verbindung der Formel IIb und als Komponente C) Diflufenzopyr und Atrazine.

**25.** Synergistische herbizide Mischung nach den Ansprüchen 1 bis 24, **dadurch gekennzeichnet, daß** die Komponente A) und die Komponente B) in einem Gewichtsverhältnis von 1:0,001 bis 1:500 vorliegen.

**26.** Synergistische herbizide Mischung nach den Ansprüchen 1 bis 24, **dadurch gekennzeichnet, daß** die Komponente A) und die Komponente C) in einem Gewichtsverhältnis von 1:0,002 bis 1:800 vorliegen.

**27.** Herbizides Mittel, enthaltend eine herbizid wirksame Menge einer synergistischen herbiziden Mischung gemäß den Ansprüchen 1 bis 24, mindestens einen inerten flüssigen und/oder festen Trägerstoff und gewünschtenfalls mindestens einen grenzflächenaktiven Stoff.

**28.** Verfahren zur Herstellung von herbiziden Mitteln nach Anspruch 27, **dadurch gekennzeichnet, daß** man Komponente A), Komponente B), gewünschtenfalls Komponente C, mindestens einen inerten flüssigen und/oder festen Trägerstoff und gewünschtenfalls mindestens einen grenzflächenaktiven Stoff mischt.

**29.** Verfahren zur Bekämpfung unerwünschten Pflanzenwuchses, **dadurch gekennzeichnet, daß** man eine synergistische herbizide Mischung gemäß den Ansprüchen 1 bis 26 vor, während und/oder nach dem Auflaufen von unerwünschten Pflanzen ausbringt, wobei die herbizid wirksamen Verbindungen der Komponenten A), B) und gewünschtenfalls C) gleichzeitig oder nacheinander appliziert werden können.

**30.** Verfahren zur Bekämpfung unerwünschten Pflanzenwuchses gemäß Anspruch 29, **dadurch gekennzeichnet, daß** man die Blätter der Kulturpflanzen und der unerwünschten Pflanzen behandelt.

## Revendications

**1.** Mélange herbicide synergique, comprenant :

A) au moins un dérivé de benzoyle substitué par un 3-hétérocyclyle de formule I

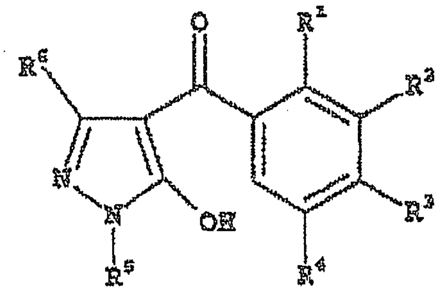

I

dans laquelle les variables ont les significations suivantes :

$R^1$, $R^3$ représentent un halogène, un, alkyle en $C_1$-$C_6$, un halogénoalkyle en $C_1$-$C_6$, un alcoxy en $C_1$-$C_6$, un halogénoalcoxy en $C_1$-$C_6$, un alkylthio en $C_1$-$C_6$, un alkylsulfinyle en $C_1$-$C_6$ ou un alkylsulfonyle en $C_1$-$C_6$ ;
$R^2$ représente un radical hétérocyclique choisi dans le groupe : isoxazol-3-yle, isoxazol-4-yle, isoxazol-5-yle, 4,5-dihydroisoxazol-3-yle, 4,5-dihydroisoxazol-4-yle et 4,5-dihydroisoxazol-5-yle, les six radicaux mentionnés pouvant ne pas être substitués ou être mono- ou polysubstitués par un halogène, un alkyle en $C_1$-$C_4$, un alcoxy en $C_1$-$C_4$, un halogénoalkyle en $C_1$-$C_4$, un halogénoalcoxy en $C_1$-$C_4$ ou un alkylthio en $C_1$-$C_4$ ;
$R^4$ représente un hydrogène, un halogène ou un alkyle en $C_1$-$C_6$ ;
$R^5$ représente un alkyle en $C_1$-$C_6$ ;
$R^6$ représente un hydrogène ou un alkyle en $C_1$-$C_6$ ;

ou un de ses sels environnementalement compatibles ;
et
B) le composé de formule IIb

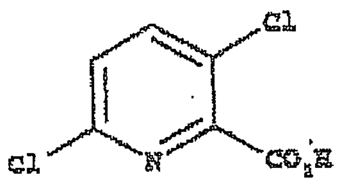

IIb

ou un de ses sels environnementalement compatibles ;
et
C) au moins un composé herbicide choisi dans le groupe comprenant les inhibiteurs d'acétyle-CoA carboxylase (ACC), les inhibiteurs d'acétolactate synthase (ALS), les amides, les herbicides auxines, les inhibiteurs du transport d'auxines, les inhibiteurs de biosynthèse de caroténoïdes, les inhibiteurs d'énolpyruvylshikimate 3-phosphate synthase (EPSPS), les inhibiteurs de glutamine synthétase, les inhibiteurs de biosyntèse de lipides, les inhibiteurs de la mitose, les inhibiteurs de protoporphyrinogène IX oxydase, les inhibiteurs de photosynthèse, les synergistes, les substances de croissance, les inhibiteurs de biosynthèse de la paroi cellulaire et une variété d'autres herbicides ;

en une quantité synergiquement efficace.

**2.** Mélange herbicide synergique selon la revendication 1, comprenant, en tant que composant A), un dérivé de benzoyle substitué par un 3-hétérocyclyle de formule I, dans laquelle $R^4$ représente l'hydrogène.

**3.** Mélange herbicide synergique selon l'une quelconque des revendications 1 à 2, comprenant, en tant que composant A), un dérivé de benzoyle substitué par un 3-hétérocyclyle de formule I, dans laquelle :

$R^1$ représente un halogène, un alkyle en $C_1$-$C_6$ ou un alkylsulfonyle en $C_1$-$C_6$ ;

$R^3$ représente un halogène ou un alkylsulfonyle en $C_1$-$C_6$.

**4.** Mélange herbicide synergique selon l'une quelconque des revendications 1 à 3, comprenant, en tant que composant A), un dérivé de benzoyle substitué par un 3-hétérocyclyle de formule I, dans laquelle :

$R^2$ représente un radical hétérocyclique choisi dans le groupe : isoxazol-3-yle, isoxazol-5-yle et 4,5-dihydroisoxazol-3-yle, les trois radicaux mentionnés pouvant ne pas être substitués ou être mono- ou polysubstitués par un halogène, un alkyle en $C_1$-$C_4$, un alcoxy en $C_1$-$C_4$, un halogénoalkyle en $C_1$-$C_4$, un halogénoalcoxy en $C_1$-$C_4$ ou un alkylthio en $C_1$-$C_4$.

**5.** Mélange herbicide synergique selon l'une quelconque des revendications 1 à 4, comprenant, en tant que composant A), un dérivé de benzoyle substitué par un 3-hétérocyclyle de formule I, dans laquelle :

$R^2$ représente un isoxazol-5-yle, un 3-méthylisoxazol-5-yle, un 4,5-dihydroisoxazol-3-yle, un 5-méthyl-4,5-dihydroisoxazol-3-yle, un 5-éthyl-4,5-dihydroisoxazol-3-yle ou un 4,5-diméthyl-4,5-dihydroisoxazol-3-yle.

**6.** Mélange herbicide synergique selon l'une quelconque des revendications 1 à 5, comprenant, en tant que composant A), le 4-[2-chloro-3-(4,5-dihydroisoxazol-3-yl)-4-méthylsulfonyl-benzoyl]-1-méthyl-5-hydroxy-1H-pyrazole.

**7.** Mélange herbicide synergique selon l'une quelconque des revendications 1 à 5, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole.

**8.** Mélange herbicide synergique selon l'une quelconque des revendications 1 à 7, comprenant, trois ingrédients actifs, un dérivé de benzoyle substitué par un 3-hétérocyclyle de formule I (composant A) selon les revendications 1 à 7 et, en tant que composant B, le composé de formule IIb et le composé de formule IIa

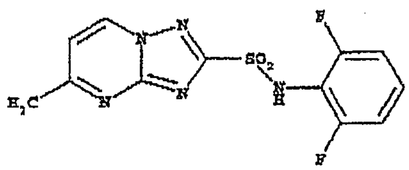

IIa

**9.** Mélange herbicide synergique selon la revendication 8, comprenant en tant que composant A), le 4-[2-méthyl-3-(4,5-dihydroisoxazol-3-yl)-4-méthylsulfonyl-benzoyl]-1-méthyl-5-hydroxy-1H-pyrazole et en tant que composant B), le composé de formule IIb et le composé de formule IIa

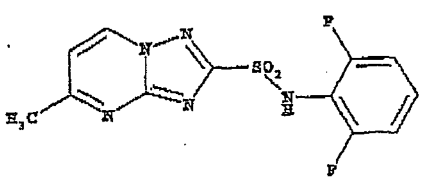

IIa

**10.** Mélange herbicide synergique selon les revendications 1 à 7, comprenant, en tant que composant C), au moins un composé herbicide choisi dans les groupes C1 à C16 :

C1 inhibiteurs d'acétyle-CoA carboxylase (ACC) :

cyclohexénone oxime éthers, esters phénoxyphénoxypropioniques ou acides arylaminopropioniques ;

C2 inhibiteurs d'acétolactate synthase (ALS) :

imidazolinones, éthers pyrimidyliques, sulfonamides ou sulfonylurées ;

C3 amides ;
C4 herbicides auxines :

acides pyridinecarboxyliques, 2,4-D ou bénazoline ;

C5 inhibiteurs du transport d'auxines ;
C6 inhibiteurs de biosynthèse de caroténoïdes ;
C7 inhibiteurs d'énolpyruvylshikimate 3-phosphate synthase (EPSPS) ;
C8 inhibiteurs de glutamine synthétase ;
C9 inhibiteurs de biosynthèse de lipides :

anilides, chloroacétanilides, thiourées, benfurésate ou perfluidone ;

C10 inhibiteurs de la mitose :

carbamates, dinitroanilines, pyridines, butamifos, chlorthal-diméthyle (DCPA) ou hydrazide maléique ;

C11 inhibiteurs de protoporphyrinogène IX oxydase :

éthers diphényliques, oxadiazoles, imides cycliques ou pyrazoles ;

C12 inhibiteurs de photosynthèse :

propanil, pyridate, pyridafol, benzothiadiazinones, dinitrophénols, dipyridylènes, urées, phénols, chloridazone, triazines, triazinones, uraciles ou biscarbamates ;

C13 synergistes :

oxiranes ;

C14 substances de croissance :

acides aryloxyalcanoïques, acides benzoïques ou acides quinolinecarboxyliques ;

C15 inhibiteurs de synthèse de la paroi cellulaire
C16 divers autres herbicides :

acides dichloropropioniques, dihydrobenzofuranes, acides phénylacétiques ou aziprotryne, barbane, bensulide, benzthiazuron, benzofluor, buminafos, buthidazole, buturon, cafenstrole, chlorbufame, chlorofenprop-méthyle, chloroxuron, cinméthyline, cumyluron, cycluron, cyprazine, cyprazole, dibenzyluron, dipropétryn, dymron, églinazin-éthyle, endothal, éthiozine, flucabazone, fluorobentranil, flupoxam, isocarbamide, isopropaline, karbutilate, méfluidide, monuron, napropamide, napropanilide, nitraline, oxacicloméfone, phénisopham, pipérophos, procyazine, profluraline, pyributicarb, secbuméton, sulfallate (CDEC), terbucarb, triazofénamide, triaziflam ou triméturon ;

ou leurs sels environnementalement compatibles.

**11.** Mélange herbicide synergique selon les revendications 1 à 7, comprenant, en tant que composant C), au moins un composé herbicide choisi dans les groupes C1 à C16 :

C1 inhibiteurs d'acétyle-CoA carboxylase (ACC) :

- cyclohexénone oxime éthers :

alloxydim, cléthodim, cloproxydim, cycloxydim, séthoxydim, tralkoxydim, butroxydim, cléfoxydim ou tépraloxydim ;

- esters phénoxyphénoxypropioniques :

clodinafop-propargyl (et, le cas échéant, cloquintocet), cyhalofop-butyle, diclofopméthyle, fenoxaprop-éthyle, fenoxaprop-P-éthyle, fenthiapropéthyle, fluazifopbutyle, fluazifop-P-butyle, haloxyfopéthoxyéthyle, haloxyfop-méthyle, haloxyfop-P-méthyle, isoxapyrifop, propaquizafop, quizalofop-éthyle, quizalofop-P-éthyle ou quizalofop-téfuryle ; ou

- acides arylaminopropioniques :

flamprop-méthyle ou flamprop-isopropyle ;

C2 inhibiteurs d'acétolactate synthase (ALS) :

- imidazolinones :

imazapyr, imazaquine, imazaméthabenzméthyle (imazame), imazamox, imazapic, imazéthapyr ou imazaméthapyr ;

- éthers pyrimidyliques :

pyrithiobac-acide, pyrithiobac-sodium, bispyribac-sodium, KIH-6127 ou pyribenzoxym ;

- sulfonamides :

florasulam, flumetsulam ou métosulam ; ou

- sulfonylurées :

amidosulfuron, azimsulfuron, bensulfuronméthyle, chlorimuron-éthyle, chlorosulfuron, cinosulfuron, cyclosulfamuron, éthametsulfuron-méthyle, éthoxy-sulfuron, flazasulfuron, halosulfuron-méthyle, imazosulfuron, metsulfuron-méthyle, nicosulfuron, primisulfuron-méthyle, prosulfuron, pyrazosulfuron-éthyle, rimsulfuron, sulfométuron-méthyle, thifen-sulfuronméthyl, triasulfuron, tribénuron-méthyle, triflusulfuron-méthyle, N-[[[4-méthoxy-6-(trifluorométhyl)-1,3,5-triazin-2-yl]amino]-carbonyl]-2-(trifluorométhyl)-benzènesulfonamide, sulfosulfuron ou iodosulfuron ;

C3 amides :

- allidochlor (CDAA), benzoylprop-éthyle, bromobutide, chlorothiamide, diphénamide, étobenzanide (benzchlomet), fluthiamide, fosamine ou monalide ;

C4 herbicides auxines :

- acides pyridinecarboxyliques :

clopyralid ou picloram ; ou

- 2,4-D ou bénazoline ;

C5 inhibiteurs du transport d'auxines :

- naptalame ou diflufenzopyr ;

C6 inhibiteurs de biosynthèse de caroténoïdes :

- benzofénap, clomazone (diméthazone), diflufénican, fluorochloridone, fluridone, pyrazolynate, pyrazoxyfène, isoxaflutole, isoxachlortole, mésotrione, sulcotrione (chloromésulone), kétospiradox, flurtamone, norflurazon ou amitrol ;

C7 inhibiteurs d'énolpyruvylshikimate 3-phosphate synthase (EPSPS) :

- glyphosate ou sulfosate ;

C8 inhibiteurs de glutamine synthétase :

- bilanafos (bialaphos) ou glufosinate-ammonium ;

C9 inhibiteurs de biosynthèse de lipides :

- anilides :

  anilofos ou méfénacet ;

- chloroacétanilides :

  diméthénamide, S-diméthénamide, acétochlor, alachlor, butachlor, buténachlor, diéthatyl-éthyle, diméthachlor, métazachlor, métolachlor, S-métolachlor, prétilachlor, propachlor, prynachlor, terbuchlor, thénylchlor ou xylachlor ;

- thiourées :

  butylate, cycloate, di-allate, dimépipérate, EPTC, esprocarb, molinate, pébulate, prosulfocarb, thiobencarb (benthiocarb), tri-allate ou vernolate ; ou

- benfurésàte ou perfluidone ;

C10 inhibiteurs de la mitose :

- carbamates :

  asulam, carbétamide, chlorpropham, orbencarb, pronamide (propyzamide), propham ou tiocarbazil ;

- dinitroanilines :

  bénéfine, butraline, dinitramine, éthalfluraline, fluchloraline, oryzaline, pendiméthaline, prodiamine ou trifluraline ;

- pyridines:

  dithiopyr ou thiazopyr ; ou

- butamifos, chlorthal-diméthyle (DCPA) ou hydrazide maléique ;

C11 inhibiteurs de protoporphyrinogène IX oxydase :

- éthers diphényliques :

  acifluorfen, acifluorfen-sodium, aclonifen, bifénox, chlornitrofen (CNP), éthoxyfen, fluorodifen, fluoroglycofen-éthyle, fomesafen, furyloxyfen, lactofen, nitrofen, nitrofluorfen ou oxyfluorfen ;

- oxadiazoles :

  oxadiargyl ou oxadiazon ;

- imides cycliques :

  azafenidin, butafenacil, carfentrazoneéthyle, cinidon-éthyle, flumicloracpentyle, flumioxazine, flumipropyne, flupropacile, fluthiacet-méthyle, sulfentrazone ou thidiazimin ; ou

- pyrazoles :

  ET-751, JV 485 ou nipyraclofen ;

C12 inhibiteurs de photosynthèse :

- propanil, pyridate ou pyridafol ;
- benzothiadiazinones :

  bentazone ;

- dinitrophénols :

  bromofenoxim, dinoseb, dinoseb-acétate, dinoterb ou DNOC ;

- dipyridylènes :

  cyperquat-chlorure, difenzoquatméthylsulfate, diquat ou paraquatdichlorure ;

- urées :

  chlorobromuron, chlorotoluron, difenoxuron, diméfuron, diuron, éthydimuron, fenuron, fluométhuron, isoproturon, isouron, linuron, méthabenzthiazuron, méthazole, métobenzuron, métoxuron, monolinuron, néburon, siduron ou tébuthiuron ;

- phénols :

  bromoxynil ou ioxynil ;

- chloridazone ;
- triazines :

  amétryn, atrazine, cyanazine, desmétryn, diméthaméthryn, hexazinone, prométon, prométryn, propazine, simazine, simétryn, terbuméton, terbutryn, terbutylazine ou triétazine ;

- triazinones :

  métamitron ou métribuzine ;

- uraciles :

  bromacil, lénacil ou terbacil ; ou

- biscarbamates :

  desmédipham ou phenmédipham ;

C13 synergistes :

- oxiranes :

  tridiphane ;

C14 substances de croissance:

- acides aryloxyalcanoïques :

  2,4-DB, clométrop, dichlorprop, dichlorprop-P (2,4-DP-P), fluoroxypyr, MCPA, MCPB, mécoprop, mécoprop-P ou triclopyr ;

- acides benzoïques :

chloramben ou dicamba ; ou

- acides quinolinecarboxyliques :

quinclorac ou quinmérac ;

C15 inhibiteurs de synthèse de la paroi cellulaire :

- isoxaben ou dichlobenil ;

C16 divers autres herbicides :

- acides dichloropropioniques :

dalapon ;
dihydrobenzofuranes :
éthofumésate ;

- acides phénylacétiques :

chlorfenac (fenac) ; ou

- aziprotryne, barbane, bensulide, benzthiazuron, benzofluor, buminafos, buthidazole, buruton, cafenstrole, chlorbufame, chlorofenprop-méthyle, chloroxuron, cinméthyline, cumyluron, cycluron, cyprazine, cyprazole, dibenzyluron, dipropétryn, dymron, églinazin-éthyle, endothal, éthiozine, flucabazone, fluorobentranil, flupoxam, isocarbamide, isopropaline, karbutilate, méfluidide, monuron, napropamide, napropanilide, nitraline, oxaciclométone, phénisopham, pipérophos, procyazine, profluraline, pyributicarb, secbuméton, sulfallate (CDEC), terbucarb, triazofénamide, triaziflam ou triméturon ;

ou leurs sels environnementalement compatibles.

**12.** Mélange herbicide synergique selon la revendication 10, comprenant, en tant que composant C), au moins un composé herbicide choisi dans les groupes C5, C9 ou C12.

**13.** Mélange herbicide synergique selon la revendication 12, comprenant, en tant que composant C), au moins un composé herbicide choisi dans les groupes C9 ou C12.

**14.** Mélange herbicide synergique selon là revendication 12, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un composé herbicide choisi dans le groupe C5.

**15.** Mélange herbicide synergique selon la revendication 14, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), le diflufenzopyr.

**16.** Mélange herbicide synergique selon la revendication 12, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un composé herbicide choisi dans le groupe C9.

**17.** Mélange herbicide synergique selon la revendication 16, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un chloroacétanilide.

**18.** Mélange herbicide synergique selon la revendication 16, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), l'acétochlor.

**19.** Mélange herbicide synergique selon la revendication 12, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un composé herbicide choisi dans le groupe C12.

**20.** Mélange herbicide synergique selon la revendication 19, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), une triazine du groupe C12.

**21.** Mélange herbicide synergique selon la revendication 20, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), l'atrazine.

**22.** Mélange herbicide synergique selon la revendication 12, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un composé herbicide choisi dans le groupe C5 et un composé herbicide choisi dans le groupe C12.

**23.** Mélange herbicide synergique selon la revendication 22, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un inhibiteur du transport d'auxine et une triazine.

**24.** Mélange herbicide synergique selon la revendication 23, comprenant, en tant que composant A), le 4-[2-méthyl-3-(4,5-dihydroisoxazol-3-yl)-4-méthylsulfonyl-benzoyl]-1-méthyl-5-hydroxy-1H-pyrazole, en tant que composant B), le composé de formule IIb, et en tant que composant C), un diflufenzopyr et une atrazine.

**25.** Mélange herbicide synergique selon l'une quelconque des revendications 1 à 24, dans lequel les composants A) et B) sont présents en un rapport en poids de 1:0,001 à 1:500.

**26.** Mélange herbicide synergique selon l'une quelconque des revendications 1 à 24, dans lequel les composants A) et C) sont présents en un rapport en poids de 1:0,002 à 1:800.

**27.** Composition herbicide comprenant une quantité ayant une action herbicide d'un mélange herbicide synergique selon l'une quelconque des revendications 1 à 24, au moins un véhicule liquide et/ou solide inerte et, si on le souhaite, au moins un tensioactif.

**28.** Procédé de préparation de compositions herbicides selon la revendication 27, dans lequel le composant A), le composant B), si on le souhaite, le composant C), au moins un véhicule liquide et/ou solide inerte et, le cas échéant, un tensioactif sont mélangés.

**29.** Procédé de contrôle d'une végétation non désirée, comprenant l'application d'un mélange herbicide synergique selon l'une quelconque des revendications 1 à 26 avant, durant et/ou après l'émergence des plantes non désirées, les composés à action herbicide des composants A), B) et, si on le souhaite, C) pouvant être appliqués simultanément ou successivement.

**30.** Procédé de contrôle d'une végétation non désirée selon la revendication 29, dans lequel les feuilles des plantes cultivées et des plantes non désirées sont traitées.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9626206 A
- WO 9741116 A
- WO 9741117 A
- WO 9741118 A
- WO 9831681 A
- EP 302203 A
- DE 3336140 A
- DE 3603789 A
- EP 84893 A
- EP 332133 A
- EP 9603996 W


### Non-patent literature cited in the description


- **HOCK ; FEDTKE ; SCHMIDT.** Herbizide [Herbicides. Thieme, 1995
- Agricultural Chemicals. Book II Herbicides. 1993
- Agricultural Chemicals. Book II Herbicides
- Short Review of Herbicides & PGRs. 1991
- Global Herbicide Directory. 1994
- European Directory of Agrochemical Products. Herbicides. vol. 2
- The Pesticide Maunal. 2000
- Brighton Crop Protection Conference. *Weeds,* 1993
- **S. R. COLBY.** Calculating synergistic and antagonistic responses of herbicide combinations. *Weeds,* 1967, vol. 15, 20